# EUROPEAN PATENT APPLICATION

(11) **EP 4 528 984 A1**
(43) Date of publication of application: **26.03.2025**
(21) Application number: 23826060.8
(22) Date of filing: 24.05.2023
(51) Int. Cl.: H02J 50/12, H04L 27/32, H04L 27/00

(54) **WIRELESS CHARGING CHIP, SENSING APPARATUS AND ELECTRONIC DEVICE**

(30) Priority: 20.06.2022 CN 202210701676
(71) Applicant: Huawei Technologies Co., Ltd., Shenzhen, Guangdong 518129 (CN)
(72) Inventor: HU, Zhangrong, Shenzhen, Guangdong 518129 (CN); YANG, Tianyu, Shenzhen, Guangdong 518129 (CN); YAO, Zhendong, Shenzhen, Guangdong 518129 (CN); YANG, Jiangtao, Shenzhen, Guangdong 518129 (CN)
(74) Representative: Goddar, Heinz J.
(86) International application number: PCT/CN2023/096039
(87) International publication number: WO 2023/246411

(57) **Abstract**

Embodiments of this application provide a wireless charging chip, an induction apparatus, and an electronic device. A resonant circuit, a first modulation capacitor, a modulation switch module, and a control module are included. A first end of the resonant circuit is connected to one end of the first modulation capacitor, the other end of the first modulation capacitor is grounded through the modulation switch module, and a control end of the modulation switch module is connected to the control module; the control module is configured to: obtain encoded data, and control turn-on/turn-off of the modulation switch module based on the encoded data, where the encoded data is data that is encoded in one of at least two preset coding modes, and the coding mode represents a coding scheme of encoding the data; and the resonant circuit is configured to send coding information to a target apparatus based on turn-on/turn-off of the modulation switch module, where the coding information is used to provide the encoded data to the target apparatus. This can enrich functions of the apparatus and reduce production costs.

## Description

This application claims priority to Chinese Patent Application No. 202210701676.8, filed with the China National Intellectual Property Administration on June 20, 2022 and entitled "WIRELESS CHARGING CHIP, INDUCTION APPARATUS, AND ELECTRONIC DEVICE", which is incorporated herein by reference in its entirety.

### TECHNICAL FIELD

This application relates to the field of wireless charging technologies, and more specifically, to a wireless charging chip, an induction apparatus, and an electronic device.

### BACKGROUND

An RFID (Radio Frequency Identification, radio frequency identification) technology is an automatic identification technology. Contactless bidirectional data communication is performed in a radio frequency manner, and a recording medium, such as an electronic tag or a radio frequency card, is read and written in a radio frequency manner, to identify a target and exchange data. With development of intelligent equipment, the RFID technology is widely used in transportation, security control and other fields. For example, an IC card (Integrated Circuit Card, integrated circuit card) and an ID card (Identification Card, identification card) that are commonly used in life implement contactless data communication with a card reader or a reader by using the RFID technology.

Currently, an operating frequency of the IC card is usually 13.56 MHz (megahertz). An operating frequency of an NFC (Near Field Communication, near field communication) electronic device is 13.56 MHz, and the NFC electronic device has a card emulation function. Therefore, to facilitate use of the IC card, the card emulation function of the NFC electronic device may be usually used to emulate the IC card, so that the NFC electronic device can have a function of the IC card. In this way, a user does not need to carry the physical IC card. This greatly facilitates the user. However, an operating frequency of the ID card is usually 125 kHz (kilohertz), the operating frequency is low, and the card emulation function of the NFC electronic device cannot be used to emulate the ID card. However, to implement an emulation function of a low-frequency RFID card, for example, the ID card, in the electronic device, an additional operating circuit of the low-frequency RFID card is needed in the electronic device. Consequently, a layout area of the circuit in the electronic device and production costs are increased.

### SUMMARY

In view of this, this application provides a wireless charging chip, an induction apparatus, and an electronic device, to resolve problems of an increased layout area of a circuit in the electronic device and increased production costs caused by an additional low-frequency RFID card that is needed to implement an emulation function of the low-frequency RFID card in the electronic device in the conventional technology.

According to a first aspect, an embodiment of this application provides an induction apparatus, including a resonant circuit, a first modulation capacitor, a modulation switch module, and a control module, where
a first end of the resonant circuit is connected to one end of the first modulation capacitor, the other end of the first modulation capacitor is grounded through the modulation switch module, and a control end of the modulation switch module is connected to the control module;
the control module is configured to: obtain encoded data, and control turn-on/turn-off of the modulation switch module based on the encoded data, where the encoded data is data that is encoded in one of at least two preset coding modes, and the coding mode represents a coding scheme of encoding the data; and
the resonant circuit is configured to send coding information to a target apparatus based on turn-on/turn-off of the modulation switch module, where the coding information is used to provide the encoded data to the target apparatus.

In an implementation of the first aspect, the apparatus further includes a rectifier module, where
the resonant circuit is further configured to generate an induced current;
two input ends of the rectifier module are respectively connected to the first end and a second end of the resonant circuit; and the rectifier module is configured to convert the induced current into a direct current signal for outputting; and
the at least two preset coding modes include a wireless charging coding mode.

In an implementation of the first aspect, the induction apparatus further includes a charging management circuit, where
the charging management circuit is configured to receive the direct current signal from the rectifier module to charge a battery of the induction apparatus.

In an implementation of the first aspect, the at least two preset coding modes further include a radio frequency identification coding mode, and the radio frequency identification coding mode is different from the wireless charging coding mode.

In an implementation of the first aspect, that the control module is configured to obtain encoded data specifically includes:
determining a first coding mode;
obtaining to-be-encoded data corresponding to the first coding mode; and
encoding the to-be-encoded data based on the first coding mode, where
the first coding mode is one of the at least two preset coding modes of the induction apparatus.

In an implementation of the first aspect, the control module is further configured to: detect an operating frequency of the resonant circuit or the direct current signal, and determine the first coding mode based on the operating frequency or the direct current signal.

In an implementation of the first aspect, the control module, the rectifier module, and the modulation switch module are integrated into a wireless charging chip.

In an implementation of the first aspect, the apparatus further includes a first signal detection circuit, where
the first signal detection circuit is connected to an output end of the rectifier module; and
the first signal detection circuit is configured to generate a first signal based on the direct current signal, where the first signal indicates the charging management circuit to supply power to the wireless charging chip.

In an implementation of the first aspect, the first signal detection circuit is further connected to the charging management circuit.

In an implementation of the first aspect, the induction apparatus includes a processor, and the first signal detection circuit is connected to the processor; and
the processor is configured to: receive the first signal, and send a second signal to the charging management circuit, where the second signal indicates the charging management circuit to supply power to the wireless charging chip.

In an implementation of the first aspect, the modulation switch module includes a first modulation switch.

In an implementation of the first aspect, the apparatus further includes a second modulation capacitor and a second modulation switch, where
one end of the second modulation capacitor is connected to the second end of the resonant circuit, the other end of the second modulation capacitor is connected to a first end of the second modulation switch, a second end of the second modulation switch is grounded, and a control end of the second modulation switch is connected to the control module;
the control module is further configured to control turn-on/turn-off of the second modulation switch based on the encoded data; and
the resonant circuit is specifically configured to send the coding information to the target apparatus based on turn-on/turn-off of the modulation switch module and the second modulation switch.

In an implementation of the first aspect, the control module includes a first control submodule and a second control submodule, and the modulation switch module includes a third modulation switch and a fourth modulation switch;
a first end of the third modulation switch and a first end of the fourth modulation switch are both connected to the other end of the first modulation capacitor, a second end of the third modulation switch and a second end of the fourth modulation switch are both grounded, a third end of the third modulation switch is connected to the first control submodule, and a third end of the fourth modulation switch is connected to the second control submodule;
the first control submodule is configured to: obtain first to-be-encoded data in response to a received first trigger signal, encode the first to-be-encoded data based on a preset second coding mode to obtain first encoded data, and control turn-on/turn-off of the third modulation switch based on the first encoded data;
the second control submodule is configured to: obtain second to-be-encoded data in response to a received second trigger signal, encode the second to-be-encoded data based on a preset third coding mode to obtain second encoded data, and control turn-on/turn-off of the fourth modulation switch based on the second encoded data; and
the resonant circuit is specifically configured to: send first coding information to the target apparatus based on turn-on/turn-off of the third modulation switch, where the first coding information is used to provide the first encoded data to the target apparatus; or
send second coding information to the target apparatus based on turn-on/turn-off of the fourth modulation switch, where the second coding information is used to provide the second encoded data to the target apparatus.

In an implementation of the first aspect, the first control submodule, the third modulation switch, and the rectifier module are integrated into a wireless charging chip, and the second control submodule includes a processor.

In an implementation of the first aspect, the apparatus further includes a second signal detection circuit, where
the second signal detection circuit is connected to an output end of the rectifier module and the second control submodule; and
the second signal detection circuit is configured to send the second trigger signal to the second control submodule based on the direct current signal.

According to a second aspect, an embodiment of this application provides a wireless charging chip, including a rectifier module, a fourth modulation switch, and a control module, where
a first end of the fourth modulation switch is configured to be externally connected to a third modulation capacitor, a second end of the fourth modulation switch is grounded, and a control end of the fourth modulation switch is connected to the control module;
the rectifier module is configured to: be externally connected to a resonant circuit, generate an induced current, and convert the induced current into a direct current signal for outputting;
the control module is configured to: obtain encoded data, and control turn-on/turn-off of the fourth modulation switch based on the encoded data, to enable the resonant circuit to send coding information to a target apparatus based on turn-on/turn-off of the fourth modulation switch, where the coding information is used to provide the encoded data to the target apparatus; and
the encoded data is data that is encoded in one of at least two preset coding modes, and the coding mode represents a coding scheme of encoding the data.

In an implementation of the second aspect, the at least two preset coding modes include: a wireless charging coding mode and a radio frequency identification coding mode.

According to a third aspect, an embodiment of this application provides an electronic device, including the induction apparatus according to any one of the implementations of the first aspect or the wireless charging chip according to any one of the implementations of the second aspect.

According to the solution provided in embodiments of this application, a resonant circuit, a first modulation capacitor, a modulation switch module, and a control module are included. One end of the first modulation capacitor is connected to a first end of the resonant circuit, the other end of the first modulation capacitor is connected to a first end of the modulation switch module, a second end of the modulation switch module is grounded, and a control end of the modulation switch module is connected to the control module; the control module is configured to: obtain encoded data, and control turn-on/turn-off of the modulation switch module based on the encoded data, where the encoded data is data that is encoded in one of at least two preset coding modes of the electronic device; and the resonant circuit is configured to send coding information to a target apparatus based on turn-on/turn-off of the modulation switch module, where the coding information is used to provide the encoded data to the target apparatus. In this way, the induction apparatus includes the resonant circuit, the first modulation capacitor, the modulation switch module, and the control module. One end of the first modulation capacitor is connected to the first end of the resonant circuit, the first end of the modulation switch module is connected to the other end of the first modulation capacitor, and the control end of the modulation switch is connected to the control module. The control module is configured to: obtain the encoded data, where the encoded data is data that is encoded in one of the at least two preset coding modes; and control turn-on/turn-off of the modulation switch module based on the encoded data. The resonant circuit can send the coding information to the target apparatus based on turn-on/turn-off of the modulation switch module, to provide the encoded data to the target apparatus, and enable the induction apparatus and the target apparatus to perform corresponding communication. That is, in this application, the electronic device can send, to the target apparatus through the same resonant circuit, the encoded data that is encoded in the at least two coding modes. In this way, a set of a resonant circuit and a modulation capacitor are reused for encoded data in a plurality of coding modes, and no additional resonant circuit and modulation capacitor are needed. Therefore, the induction apparatus can implement a plurality of wireless transmission functions almost without additional costs and layout areas. This enriches functions of the induction apparatus and improves user experience.

### BRIEF DESCRIPTION OF DRAWINGS

To describe technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.
FIG. 1 is a schematic of a scenario of a receiving circuit of a low-frequency RFID card according to an embodiment of this application;
FIG. 2 is a diagram of a structure of an induction apparatus according to an embodiment of this application;
FIG. 3a is a diagram of a structure of another induction apparatus according to an embodiment of this application;
FIG. 3b is a diagram of a structure of another induction apparatus according to an embodiment of this application;
FIG. 4 is a diagram of a scenario of a coding mode according to an embodiment of this application;
FIG. 5 is a diagram of a structure of another induction apparatus according to an embodiment of this application;
FIG. 6a is a diagram of a structure of another induction apparatus according to an embodiment of this application;
FIG. 6b is a diagram of a structure of another induction apparatus according to an embodiment of this application;
FIG. 7 is a diagram of a structure of another induction apparatus according to an embodiment of this application;
FIG. 8 is a diagram of a structure of another induction apparatus according to an embodiment of this application;
FIG. 9a is a diagram of a structure of another induction apparatus according to an embodiment of this application;
FIG. 9b is a diagram of a structure of another induction apparatus according to an embodiment of this application;
FIG. 10a is a diagram of a structure of another induction apparatus according to an embodiment of this application;
FIG. 10b is a diagram of a structure of another induction apparatus according to an embodiment of this application;
FIG. 11a is a diagram of a structure of another induction apparatus according to an embodiment of this application;
FIG. 11b is a diagram of a structure of another induction apparatus according to an embodiment of this application;
FIG. 12 is a diagram of a scenario of an induction apparatus according to an embodiment of this application;
FIG. 13 is a diagram of a structure of another induction apparatus according to an embodiment of this application;
FIG. 14 is a diagram of a structure of another induction apparatus according to an embodiment of this application;
FIG. 15a is a diagram of a structure of another induction apparatus according to an embodiment of this application;
FIG. 15b is a diagram of a structure of another induction apparatus according to an embodiment of this application;
FIG. 16 is a diagram of a scenario of another induction apparatus according to an embodiment of this application;
FIG. 17 is a schematic flowchart of a data processing method according to an embodiment of this application;
FIG. 18 is a schematic flowchart of another data processing method according to an embodiment of this application; and
FIG. 19 is a diagram of a structure of a wireless charging chip according to an embodiment of this application.

### DESCRIPTION OF EMBODIMENTS

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Before embodiments of this application are specifically described, terms applied to or possibly applied to embodiments of this application are first explained.

Amplitude shift keying (Amplitude Shift Keying, ASK) is equivalent to amplitude modulation in analog signals, except that a carrier frequency signal is multiplied by a binary number. For an amplitude shift, a frequency and a phase are used as constants and an amplitude is used as a variable. Information bits are transmitted based on a carrier amplitude. That is, the carrier amplitude changes with a modulation signal.

An RFID (Radio Frequency Identification, radio frequency identification) technology is an automatic identification technology. Contactless bidirectional data communication is performed in a radio frequency manner, and a recording medium, such as an electronic tag or a radio frequency card, is read and written in a radio frequency manner, to identify a target and exchange data.

In some technologies, RFID is widely used. Common applications include: an animal chip, an automobile chip anti-theft device, access control, parking lot control, production line automation, material management, and other fields. An IC card (Integrated Circuit Card, integrated circuit card) and an ID card (Identification Card, identification card) that are commonly used in life implement contactless data communication with a card reader or a reader by using the RFID technology.

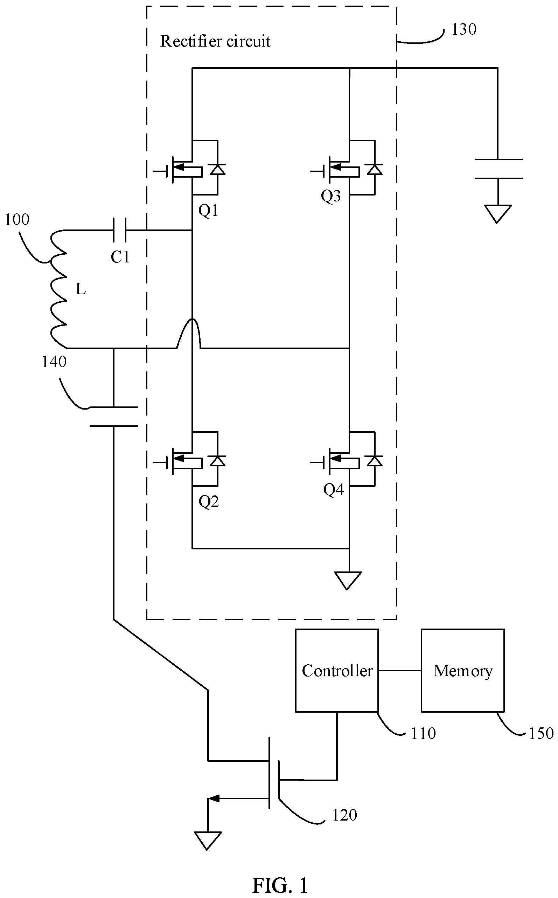

Currently, to facilitate use by a user, the user expects to emulate functions of an IC card and an ID card in an electronic device commonly used by the user, for example, a mobile phone. In this way, the user does not need to carry a physical card. An operating frequency of the IC card is usually 13.56 MHz (megahertz). An operating frequency of an NFC (Near Field Communication, near field communication) electronic device is 13.56 MHz, and the NFC electronic device has a card emulation function. Therefore, in some technologies, to facilitate use of the IC card, the NFC electronic device with the card emulation function may be usually used to emulate the IC card, so that the NFC electronic device can have a function of the IC card. In this way, the user does not need to carry the physical IC card. This greatly facilitates the user. However, an operating frequency of the ID card is usually 125 kHz (kilohertz), the operating frequency is low, and the NFC electronic device with the card emulation function cannot be used to emulate the ID card. However, to implement an emulation function of a low-frequency RFID card, for example, the ID card, in the electronic device, an additional receiving circuit of the low-frequency RFID card is needed in the electronic device. Consequently, a layout area of the circuit in the electronic device and production costs are increased. As shown in FIG. 1, the receiving circuit of the low-frequency RFID card includes: a receiving coil 100, a controller 110, an ASK modulation switch 120, a rectifier circuit 130, a low-frequency modulation capacitor 140, and a memory 150. One end of the low-frequency modulation capacitor 140 is connected to one end of the receiving coil 100, the other end of the low-frequency modulation capacitor 140 is connected to a first end of the ASK modulation switch 120, a second end of the ASK modulation switch 120 is grounded, and the controller 110 is connected to a control end of the ASK modulation switch 120. The receiving coil 100 is connected to the rectifier circuit 130.

In this way, when a drive coil of the card reader generates an alternating magnetic field, the receiving coil 100 of the low-frequency RFID card can generate an alternating current in the alternating magnetic field, convert alternating electric energy into direct current energy through the rectifier circuit 130, and supply power to each component in the low-frequency RFID card by using the direct current energy output by the rectifier circuit 130. The controller 110 reads a card number from the memory 150, and encodes the card number in a radio frequency identification coding mode to obtain encoded data. The controller 110 controls turn-on/turn-off of the ASK modulation switch 120 based on the encoded data, to control connection/disconnection of a branch circuit between the low-frequency modulation capacitor 140 and a first end of the receiving coil 100, and to modulate load impedance of the low-frequency RFID card and transmit the card number to the card reader. The card reader can decode the card number by detecting change information of the load impedance of the RFID card.

To resolve the foregoing problem, this application provides an induction apparatus, including a resonant circuit, a first modulation capacitor, a modulation switch module, and a control module. One end of the first modulation capacitor is connected to a first end of the resonant circuit, the other end of the first modulation capacitor is connected to a first end of the modulation switch module, a second end of the modulation switch module is grounded, and a control end of the modulation switch module is connected to the control module; the control module is configured to: obtain encoded data, and control turn-on/turn-off of the modulation switch module based on the encoded data, where the encoded data is data that is encoded in one of at least two preset coding modes of the electronic device; and the resonant circuit is configured to send coding information to a target apparatus based on turn-on/turn-off of the modulation switch module, where the coding information is used to provide the encoded data to the target apparatus. In this way, the induction apparatus includes the resonant circuit, the first modulation capacitor, the modulation switch module, and the control module. One end of the first modulation capacitor is connected to the first end of the resonant circuit, the first end of the modulation switch module is connected to the other end of the first modulation capacitor, and the control end of the modulation switch is connected to the control module. The control module is configured to: obtain the encoded data, where the encoded data is data that is encoded in one of the at least two preset coding modes; and control turn-on/turn-off of the modulation switch module based on the encoded data. The resonant circuit can send the coding information to the target apparatus based on turn-on/turn-off of the modulation switch module, to provide the encoded data to the target apparatus, and enable the induction apparatus and the target apparatus to perform corresponding communication. That is, in this application, the induction apparatus can send, to the target apparatus through the same resonant circuit, the encoded data that is encoded in the at least two coding modes. In this way, a set of a resonant circuit and a modulation capacitor are reused for encoded data in a plurality of coding modes, and no additional resonant circuit and modulation capacitor are needed. Therefore, the induction apparatus can implement a plurality of wireless transmission functions almost without additional costs and layout areas. This enriches functions of the induction apparatus and improves user experience.

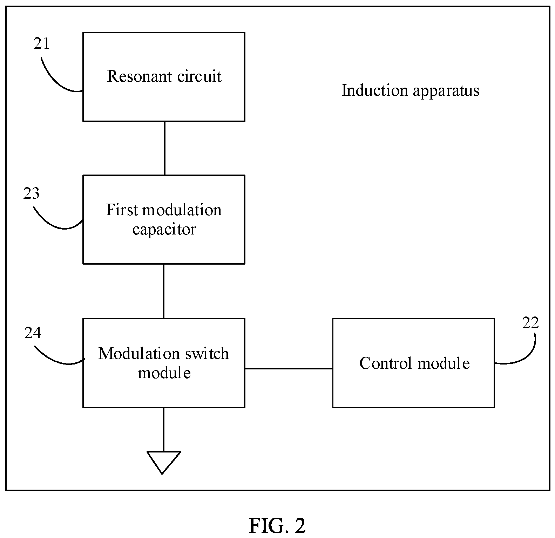

FIG. 2 is a diagram of a structure of an induction apparatus according to an embodiment of this application. As shown in FIG. 2, an embodiment of this application provides the induction apparatus, including a resonant circuit 21, a control module 22, a first modulation capacitor 23, and a modulation switch module 24.

One end of the first modulation capacitor 23 is connected to a first end of the resonant circuit 21, the other end of the first modulation capacitor 23 is connected to a first end of the modulation switch module 24, a second end of the modulation switch module 24 is grounded, and a control end of the modulation switch module 24 is connected to the control module 22.

The control module 22 is configured to: obtain encoded data, and control turn-on/turn-off of the modulation switch module 24 based on the encoded data.

The encoded data is data that is encoded in one of at least two preset coding modes of the induction apparatus. The coding mode represents a coding scheme of encoding the data.

The resonant circuit 21 is configured to send coding information to the target apparatus based on turn-on/turn-off of the modulation switch module 24. The coding information is used to provide the encoded data to the target apparatus.

It should be noted that the target apparatus is a peer device of the induction apparatus, and electromagnetic coupling may be generated between the target apparatus and the induction apparatus, and data communication may be performed between the target apparatus and the induction apparatus. The induction apparatus may implement at least two wireless transmission functions, and when each wireless transmission function is implemented, a target apparatus corresponding to the induction apparatus is different. For example, when the induction apparatus implements a wireless charging function, a target apparatus corresponding to the induction apparatus is a wireless charging transmitter. When the induction apparatus implements a radio frequency identification function, a target apparatus corresponding to the induction apparatus is a card reader.

In this embodiment of this application, when the induction apparatus needs to perform data communication with the target apparatus, for example, send data needed by the target apparatus to the target apparatus, or send control data to the target apparatus, the control module 22 of the induction apparatus may obtain encoded data, where the encoded data is data that the induction apparatus needs to send to the target apparatus. The encoded data is data that is encoded in one of the at least two preset coding modes of the induction apparatus. After obtaining the encoded data, the control module 22 of the induction apparatus may control turn-on/turn-off of the modulation switch module 24 based on the encoded data. When the control module 22 controls, based on the encoded data, the modulation switch module 24 to be turned on, the first end and the second end of the modulation switch module 24 are turned on. One end of the first modulation capacitor 23 is connected to the first end of the resonant circuit 21, and the other end of the first modulation capacitor 23 is connected to the first end of the modulation switch module 24. Therefore, when the first end and the second end of the modulation switch module 24 are turned on, a branch circuit in which the first end of the resonant circuit 21 is grounded through the first modulation capacitor 23 is connected. In this case, the resonant circuit 21 is in a discharging state, and a voltage amplitude of the resonant circuit 21 is a first value. When the control module 22 controls, based on the encoded data, the modulation switch module 24 to be turned off, the first end and the second end of the modulation switch module 24 are turned off. In this case, a branch circuit in which the first end of the resonant circuit 21 is grounded through the first modulation capacitor 23 is disconnected. The resonant circuit 21 is in a normal operating state, and the voltage amplitude of the resonant circuit 21 is a second value. That is, when the control module 22 controls turn-on/turn-off of the modulation switch module 24 based on the encoded data, turn-on/turn-off of the modulation switch module 24 enable the resonant circuit 21 to operate in different states. When the modulation switch module 24 is turned on, the resonant circuit 21 is grounded through the first modulation capacitor 23 and is in a discharging state. When the modulation switch module 24 is turned off, the resonant circuit 21 is not grounded through the first modulation capacitor 23, and is in a normal operating state. The voltage amplitude of the resonant circuit 21 in the discharging state is different from the voltage amplitude of the resonant circuit 21 in the normal operating state. Therefore, the voltage amplitude of the resonant circuit 21 can be used as the coding information, and the resonant circuit 21 sends the coding information to the target apparatus based on turn-on/turn-off of the modulation switch module 24, that is, presents different voltage amplitudes to the target apparatus. In this way, the target apparatus can receive the coding information, and decode, by parsing the coding information, the encoded data sent by the induction apparatus. That is, the target apparatus can detect a change of the voltage amplitude, decode the corresponding encoded data based on the detected change of the voltage amplitude, and then learn the data sent by the induction apparatus.

It should be understood that the resonant circuit 21 includes a coil. When the modulation switch module 24 is turned on or turned off, the resonant circuit 21 may consider that load impedance connected to the resonant circuit 21 changes. When the load impedance changes, a voltage amplitude of the coil in the resonant circuit 21 also changes. A voltage ratio between a coil in the target apparatus and a coil in the induction apparatus is invariable. Therefore, when the voltage amplitude of the coil in the resonant circuit 21 in the induction apparatus changes, a voltage amplitude of the coil in the target apparatus also accordingly changes. For example, when the control module 22 of the induction apparatus controls turn-on/turn-off of the modulation switch module 24 based on the encoded data, the connected load impedance of the resonant circuit 21 changes, so that the voltage amplitude of the coil in the resonant circuit 21 alternately appears in a high (HI) state or a low (LO) state. For example, when the encoded data is first data, the control module 22 controls, based on the encoded data, the modulation switch module 24 to be turned on, that is, the first modulation capacitor 23 is connected to the first end of the resonant circuit 21. When the encoded data is second data, the control module 22 controls, based on the encoded data, the modulation switch module 24 to be in a turn-off state, that is, a connection path between the first modulation capacitor 23 and the first end of the resonant circuit 21 is disconnected. In this way, the voltage amplitude of the coil in the resonant circuit 21 alternately appears in a high (HI) state or a low (LO) state. The target device can detect a change of the voltage amplitude, and decode the encoded data sent by the induction apparatus.

It should be noted that the at least two coding modes are preset in the induction apparatus, and the at least two coding modes are different from each other. Different coding modes correspond to different data coding schemes. However, when the induction apparatus implements different wireless transmission functions, data coding schemes needed by the wireless transmission functions are different. For example, a data coding scheme corresponding to a wireless charging function is different from a data coding scheme corresponding to a radio frequency identification function. Therefore, for different wireless transmission functions, corresponding coding modes may be set in the induction apparatus. That is, in this embodiment of this application, a quantity of coding modes of the induction apparatus is the same as that of types of wireless transmission functions implemented by the induction apparatus. That is, for different wireless transmission functions that need to be implemented by the induction apparatus, different coding modes may be set in the induction apparatus.

That is, because the induction apparatus supports at least two coding modes, the induction apparatus can separately send, to different target apparatuses, encoded data that is encoded in different coding modes, to implement different functions. In addition, for different encoded data, the induction apparatus controls, by using the control module 22 based on the encoded data, turn-on/turn-off of the modulation switch module 24, to control whether the branch circuit in which the resonant circuit 21 is grounded through the first modulation capacitor 23 and the modulation switch module 24 is connected, and to adjust the coding information of the resonant circuit 21, and enable the target apparatus to decode corresponding data based on the received coding information.

That is, in the induction apparatus, the resonant circuit 21, the first modulation capacitor 23, and the modulation switch module 24 are reused to implement sending of encoded data in different coding modes and implement different wireless transmission functions. Therefore, a set of resonant circuits are reused for encoded data in a plurality of coding modes, and no additional resonant circuit is needed, to enable the induction apparatus to implement a plurality of wireless transmission functions almost without additional costs and layout areas. This enriches functions of the induction apparatus and improves user experience.

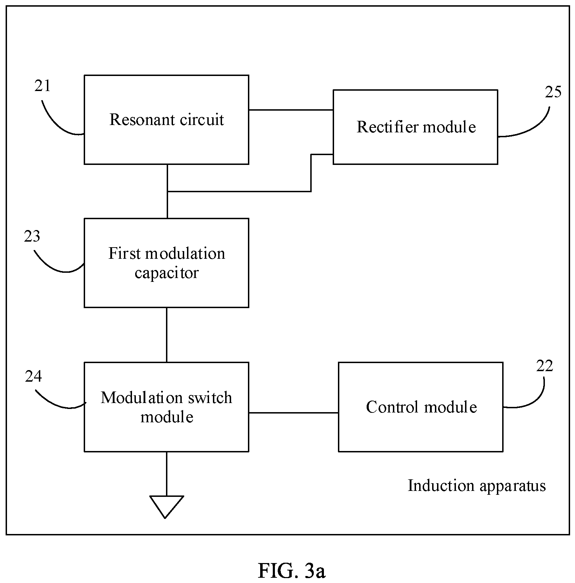

In a possible implementation, as shown in FIG. 3a, the induction apparatus further includes a rectifier module 25.

In this case, the resonant circuit 21 is further configured to generate an induced current.

Two input ends of the rectifier module 25 are respectively connected to the first end and a second end of the resonant circuit 21.

The rectifier module 25 is configured to convert the induced current into a direct current signal for outputting. The at least two preset coding modes include a wireless charging coding mode.

In this embodiment of this application, the induction apparatus may implement a wireless charging function. In this case, the target apparatus side generates an alternating magnetic field, and the resonant circuit 21 of the induction apparatus may generate an induced current in the alternating magnetic field, and output the induced current to the rectifier module 25. Because the induced current generated by the resonant circuit 21 is an alternating current signal, and an electrical signal used by a component like the control module in the induction apparatus is a direct current signal, the rectifier module 25 needs to convert the alternating current signal into a direct current signal. The rectifier module 25 may convert the received induction current into a direct current signal for outputting, to supply power to the induction apparatus.

In a possible implementation, the direct current signal output by the rectifier module 25 may charge a battery in the induction apparatus.

When performing wireless charging, the induction apparatus needs to exchange wireless charging information with the wireless charging transmitter. For example, the induction apparatus needs to send information such as charging power and a charging load to the wireless charging transmitter. Therefore, the at least two preset coding modes include a wireless charging coding mode. In this way, in a process in which the induction apparatus performs wireless charging, the control module 22 of the induction apparatus can obtain data that is encoded in the wireless charging coding mode, that is, obtain the encoded data, and control turn-on/turn-off of the modulation switch module 24 based on the obtained encoded data, to control connection or disconnection of the branch circuit between the first modulation capacitor 23 and the first end of the resonant circuit 21. The resonant circuit 21 can send, based on turn-on/turn-off of the modulation switch module 24, the coding information to the wireless charging transmitter, namely, the target apparatus, to transmit the encoded data to the wireless charging transmitter, namely, the target apparatus.

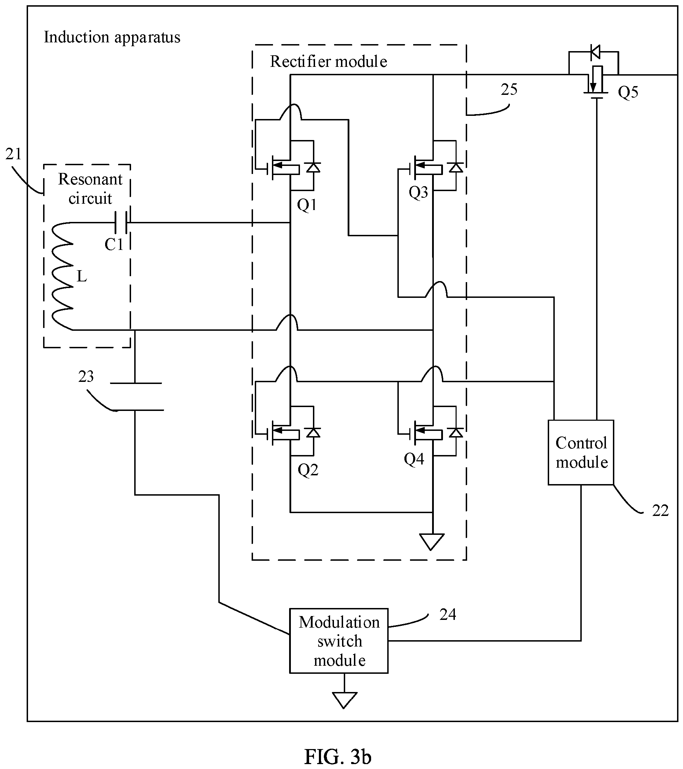

In a possible implementation, the rectifier module 25 includes four switch transistors Q1 to Q4. The switch transistors Q1 to Q4 are connected to form a full-bridge rectifier bridge, that is, a first end of the switch transistor Q1 and a first end of the switch transistor Q3 are configured to be externally connected to a load, to output the direct current signal to the load, a second end of the switch transistor Q1 is connected to a first end of the switch transistor Q2, and a second end of the switch transistor Q2 is grounded. A second end of the switch transistor Q3 is connected to a first end of the switch transistor Q4, and a second end of the switch transistor Q4 is grounded. Control ends of the switch transistors Q1 to Q4 are connected to the control module 22. The first end of the resonant circuit 21 is connected between the second end of the switch transistor Q3 and the first end of the switch transistor Q4. The second end of the resonant circuit 21 is connected between the second end of the switch transistor Q1 and the first end of the switch transistor Q2, as shown in FIG. 3b. The switch transistors Q1 to Q4 include a freewheeling diode.

In a possible implementation, the induction apparatus further includes a switch transistor Q5. A first end of the switch transistor Q5 is connected to the first end of the switch transistor Q1 and the first end of the switch transistor Q3, and a second end of the switch transistor Q5 is configured to be externally connected to the load. The control module 22 is connected to a control end of the switch transistor Q5. In this way, whether the rectifier module 25 supplies power to the external load may be controlled by using the switch transistor Q5, as shown in FIG. 3b.

In a possible implementation, the at least two preset coding modes further include a radio frequency identification coding mode, and the radio frequency identification coding mode is different from the wireless charging coding mode.

In this embodiment of this application, in addition to the wireless charging function, the induction apparatus may further implement the radio frequency identification function. Because the target apparatus used when the induction apparatus implements the wireless charging function is different from the target apparatus used when the induction apparatus implements the radio frequency identification function, a coding mode used by the induction apparatus to transmit information to the target apparatus when the induction apparatus implements the wireless charging function is different from a coding mode used by the induction apparatus to transmit information to the target apparatus when the induction apparatus implements the radio frequency identification function. Therefore, for the wireless charging function and the radio frequency identification function that are reused by the induction apparatus, the at least two preset coding modes include a wireless charging coding mode and a radio frequency identification coding mode. The wireless charging coding mode is a coding mode that needs to be used to send data when the induction apparatus implements the wireless charging function. The radio frequency identification coding mode is a coding mode that needs to be used to send data when the induction apparatus implements the radio frequency identification function.

In this way, when the radio frequency identification function needs to be implemented, the to-be-sent data may be directly encoded in the radio frequency identification coding mode, to obtain encoded data. The control module 22 may control turn-on/turn-off of the modulation switch module 24 based on the encoded data, to control connection/disconnection of the connection path between the first modulation capacitor 23 and the first end of the resonant circuit 21. The resonant circuit 21 may send the coding information to the target apparatus based on turn-on/turn-off of the modulation switch module 24.

The low-frequency RFID card implements a card number identification function in the radio frequency identification coding mode. Therefore, the induction apparatus in this embodiment of this application may send a card number to the card reader by presetting the radio frequency identification coding mode, to implement a function of the low-frequency RFID card. For example, after obtaining a card number, the induction apparatus encodes the card number in the radio frequency identification coding mode to obtain encoded data. The control module 22 controls turn-on/turn-off of the modulation switch module 24, to control connection/disconnection of the connection path between the first modulation capacitor 23 and the first end of the resonant circuit 21. The resonant circuit 21 may send the coding information to the target apparatus based on turn-on/turn-off of the modulation switch module 24, that is, send the coding information to the card reader. The card reader may decode the card number based on the coding information, to identify whether the card number is correct.

It should be noted that, in this embodiment of this application, the target apparatus is a device coupled to the resonant circuit of the induction apparatus. The induction apparatus may implement different functions based on different target apparatuses. For example, when the target apparatus is a wireless charging transmitting device, the induction apparatus needs to implement a wireless charging receiving function. If the target apparatus is a card reader, the induction apparatus needs to implement a function of emulating the low-frequency RFID card. Details are described below. When the target apparatus is the wireless charging transmitting device, the induction apparatus needs to implement the wireless charging function, that is, the induction apparatus is a wireless charging receiving device.

When a transmitting coil of the wireless charging transmitting device generates an alternating magnetic field, the resonant circuit 21 of the induction apparatus generates an induced current in the alternating magnetic field, and transmits the induced current to the rectifier module 25. The rectifier module 25 converts the received induced current into a direct current, and outputs the direct current. For example, the rectifier module 25 may transmit a direct current signal to a battery in the induction apparatus, to charge the battery of the induction apparatus. In a wireless charging process, the wireless charging transmitting device and the induction apparatus need to exchange information, for example, need to transmit a control signal or charging data. The charging data includes data such as a charging type and charging power. The control module 22 of the induction apparatus may obtain data encoded in the wireless charging coding mode, that is, the encoded data. The control module 22 may control turn-on/turn-off of the modulation switch module 24 based on the encoded data, to control connection or disconnection of the branch circuit between the first modulation capacitor 23 and the first end of the resonant circuit 21. The resonant circuit 21 may generate coding information based on connection or disconnection of the branch circuit between the first modulation capacitor 23 and the first end of the resonant circuit 21, and send the coding information to the wireless charging transmitting device. In this case, the coding information may be voltage amplitude information of the resonant circuit 21. That is, a voltage amplitude of the coil in the resonant circuit 21 changes based on connection or disconnection of the branch circuit between the first modulation capacitor 23 and the first end of the resonant circuit 21. The induction apparatus may send the encoded data based on the change of the voltage amplitude. In this case, the wireless charging transmitting device senses the change of the voltage amplitude, and may decode, based on the change of the voltage amplitude, the encoded data sent by the induction apparatus, to perform corresponding processing.

When the target apparatus is the card reader, a function that needs to be implemented by the induction apparatus is the function of emulating the low-frequency RFID card. When a transmitting coil in the card reader generates an alternating magnetic field, the resonant circuit 21 of the induction apparatus generates an induced current in the alternating magnetic field, and transmits the induced current to the rectifier module 25. The rectifier module 25 converts the received induced current into a direct current, and outputs the direct current. A voltage of the direct current signal output by the rectifier module 25 is low, and cannot charge the battery in the induction apparatus. In this case, the direct current signal output by the rectifier module 25 may supply power to other components such as the control module 22. The control module 22 may obtain card number data encoded in the radio frequency identification coding mode, that is, the encoded data. The control module 22 controls turn-on/turn-off of the modulation switch module 24 based on the encoded data, to control connection or disconnection of the branch circuit between the first modulation capacitor 23 and the first end of the resonant circuit 21. The resonant circuit 21 may generate coding information based on connection or disconnection of the branch circuit between the first modulation capacitor 23 and the first end of the resonant circuit 21, and send the coding information to the wireless charging transmitting device. In this case, the coding information may be voltage amplitude information of the resonant circuit 21. That is, a voltage amplitude of the coil in the resonant circuit 21 changes based on connection or disconnection of the branch circuit between the first modulation capacitor 23 and the first end of the resonant circuit 21. The induction apparatus may send the encoded data based on the change of the voltage amplitude. In this case, the wireless charging transmitting device senses the change of the voltage amplitude, and may decode, based on the change of the voltage amplitude, the encoded data sent by the induction apparatus, to obtain the card number.

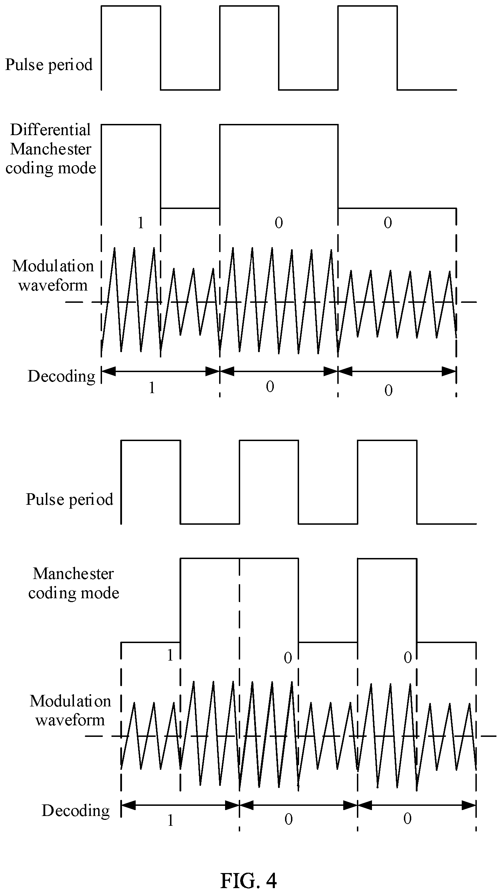

In a possible implementation, the wireless charging coding mode is differential Manchester coding. The radio frequency identification coding mode is Manchester coding, as shown in FIG. 4.

In the differential Manchester coding mode, each bit jumps once at the beginning of a clock cycle (or a modulation period). When there is a jump in the middle of the clock cycle, "1" is transmitted. When there is no jump in the middle of the clock cycle, "0" is transmitted. That is, when a modulation waveform of a voltage or a current changes twice, the induction apparatus encodes (encodes) 1 for outputting, and the target apparatus decodes (decodes) 1. When a waveform of a voltage or a current changes once, the induction apparatus encodes 0 for outputting, and the target apparatus decodes (decodes) 0. When a positive maximum amplitude (and a negative maximum amplitude) of the modulation waveform remains unchanged in a clock cycle, it is considered that the voltage or the current changes once. When a positive maximum amplitude (and a negative maximum amplitude) of the modulation waveform changes from a first amplitude to a second amplitude in a clock cycle, it is considered that the voltage or the current changes twice.

In the Manchester coding mode, each bit occupies only half of the clock cycle. When "1" is transmitted, a level is high in the first half of the clock cycle, and a level is low in the second half of the clock cycle; and when "0" is transmitted, a level remains unchanged in the first half of the clock cycle and the second half of the clock cycle. Alternatively, when "1" is transmitted, a level is low in the first half of the clock cycle, and a level is high in the second half of the clock cycle; and when "0" is transmitted, a level remains unchanged in the first half of the clock cycle and the second half of the clock cycle. In this way, there is a jump in each clock cycle, and this jump is a bit synchronization signal. That is, when the modulation waveform of the voltage or the current changes twice, and the positive maximum amplitude (and the negative maximum amplitude) of the modulation waveform changes from the first amplitude to the second amplitude in a clock cycle, a radio frequency identification device encodes 1 or 0 for outputting and the card reader decodes 1 or 0. When the positive maximum amplitude (and the negative maximum amplitude) of the waveform of the voltage or the current changes from the second amplitude to the first amplitude in a clock cycle, the induction apparatus encodes 0 or 1 for outputting and the target apparatus decodes 0 or 1.

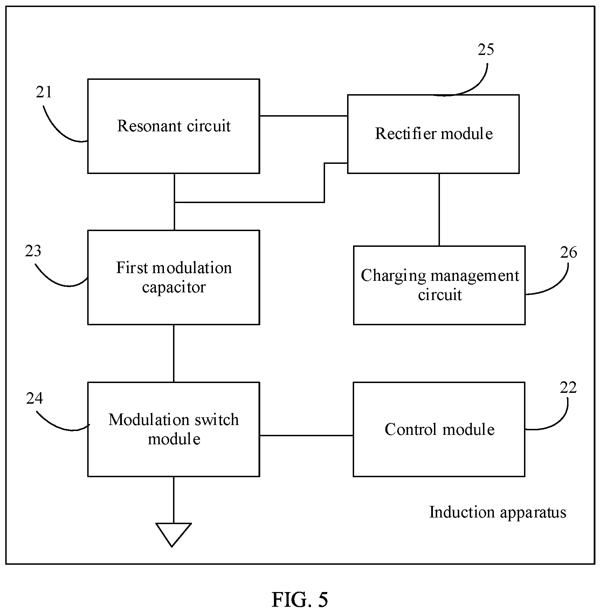

In a possible implementation, as shown in FIG. 5, the induction apparatus further includes a charging management circuit 26. The charging management circuit 26 is configured to receive the direct current signal from the rectifier module 25 to charge the battery of the induction apparatus.

In this embodiment of this application, the induction apparatus includes the charging management circuit 26. The charging management circuit 26 is connected to the rectifier module 25, and is configured to receive the direct current signal to charge the battery of the induction apparatus.

In a possible implementation, that the control module 22 is configured to obtain encoded data specifically includes:
determining a first coding mode; obtaining to-be-encoded data corresponding to the first coding mode; and encoding the to-be-encoded data based on the first coding mode. The first coding mode is one of the at least two preset coding modes of the induction apparatus.

In this embodiment of this application, the induction apparatus may implement a plurality of wireless transmission functions, for example, may implement a wireless charging function and a radio frequency identification function. After the induction apparatus is started, the control module 22 may determine the first coding mode from the at least two preset coding modes. That is, the control module 22 determines a function currently implemented by the induction apparatus. For example, when the induction apparatus currently needs to implement a wireless charging function, the control module 22 may determine the wireless charging coding mode as the first coding mode. The control module 22 needs to transmit charging-related data, such as a charging type and charging power, to the wireless charging transmitting device. In this case, the control module 22 may determine to-be-encoded data based on related parameters such as a current charging state and battery level of the induction apparatus, and encode the to-be-encoded data in the wireless charging coding mode, to obtain the encoded data. The control module 22 may control turn-on/turn-off of the modulation switch module 24 based on the encoded data, to control connection or disconnection of the branch circuit between the first modulation capacitor 23 and the first end of the resonant circuit 21. The resonant circuit 21 may generate coding information based on connection or disconnection of the branch circuit between the first modulation capacitor 23 and the first end of the resonant circuit 21, and send the coding information to the wireless charging transmitting device. In this case, the coding information may be voltage amplitude information of the resonant circuit 21. That is, a voltage amplitude of the coil in the resonant circuit 21 changes based on connection or disconnection of the branch circuit between the first modulation capacitor 23 and the first end of the resonant circuit 21. The induction apparatus may send the encoded data based on the change of the voltage amplitude. In this case, the wireless charging transmitting device senses the change of the voltage amplitude, and may decode, based on the change of the voltage amplitude, the encoded data sent by the induction apparatus, to perform corresponding processing.

When the induction apparatus currently needs to implement a radio frequency identification function, for example, the induction apparatus currently implements a function of emulating the low-frequency RFID card, the control module 22 may determine the radio frequency identification coding mode as the first coding mode. The control module 22 needs to send a card number to the target apparatus, that is, the card reader. In this case, the control module 22 may obtain to-be-encoded data from a storage medium, and encode the to-be-encoded data in the radio frequency identification coding mode to obtain the encoded data. The control module 22 may control turn-on/turn-off of the modulation switch module 24 based on the encoded data, to control connection or disconnection of the branch circuit between the first modulation capacitor 23 and the first end of the resonant circuit 21. The resonant circuit 21 may generate coding information based on connection or disconnection of the branch circuit between the first modulation capacitor 23 and the first end of the resonant circuit 21, and send the coding information to the wireless charging transmitting device. In this case, the coding information may be voltage amplitude information of the resonant circuit 21. That is, a voltage amplitude of the coil in the resonant circuit 21 changes based on connection or disconnection of the branch circuit between the first modulation capacitor 23 and the first end of the resonant circuit 21. The induction apparatus may send the encoded data based on the change of the voltage amplitude. In this case, the wireless charging transmitting device senses the change of the voltage amplitude, and may decode, based on the change of the voltage amplitude, the encoded data sent by the induction apparatus, to obtain the card number.

In a possible implementation, the control module 22 is further configured to: detect an operating frequency of the resonant circuit 21 or the direct current signal, and determine the first coding mode based on the operating frequency or the direct current signal.

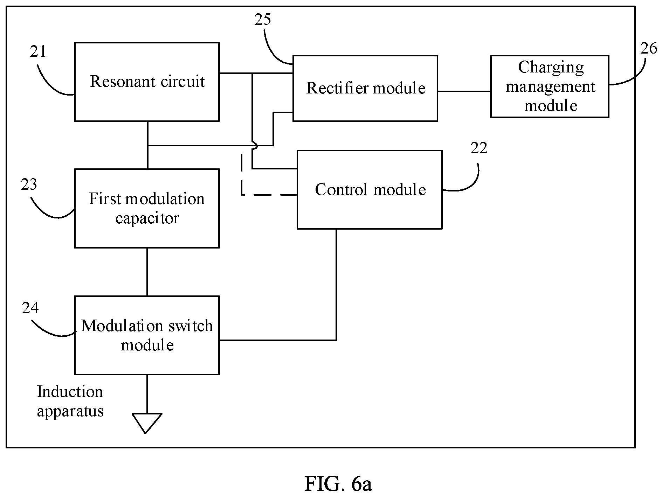

That is, when the induction apparatus implements different wireless transmission functions, the operating frequency of the resonant circuit 21 and the direct current signal output by the rectifier module 25 are different. Therefore, the control module 22 can determine, based on the operating frequency of the resonant circuit 21 or the direct current signal output by the rectifier module 25, the function currently implemented by the induction apparatus, to determine the first coding mode. In this case, the control module 22 can detect the operating frequency of the resonant circuit 21 or detect the direct current signal of the rectifier module 25. The control module 22 may be connected to the resonant circuit 21 to obtain the operating frequency of the resonant circuit, or the control module 22 may be connected to the rectifier module 25 to obtain the direct current signal. Specifically, as shown in FIG. 6a, the control module 22 is connected to the first end or the second end of the resonant circuit 21.

In this case, the control module 22 is configured to: detect the operating frequency of the resonant circuit 21, and determine the first coding mode based on the operating frequency.

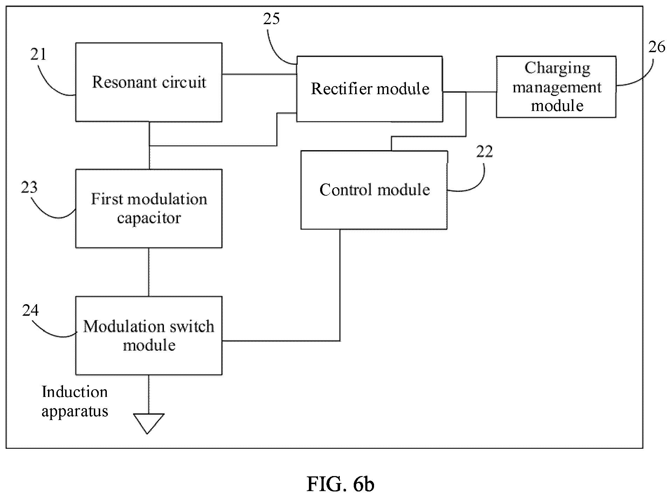

Alternatively, as shown in FIG. 6b, the control module 22 is connected to an output end of the rectifier module 25. The control module 22 is configured to: detect the direct current signal output by the rectifier module 25, and determine the first coding mode based on the direct current signal output by the rectifier module 25.

In this embodiment of this application, the induction apparatus may implement a plurality of functions, and when each function is implemented, the coding mode and the to-be-encoded data are not completely the same. Therefore, the induction apparatus needs to first determine the first coding mode and the corresponding to-be-encoded data before performing data transmission. When the induction apparatus is coupled to different target apparatuses, specific values of operating parameters in the resonant circuit 21 and the rectifier module 25 are different because of different target apparatuses. Therefore, the control module 22 can determine, based on the value of the operating parameter, a function currently implemented by the induction apparatus, to determine the first coding mode and the corresponding to-be-encoded data. For example, when the induction apparatus is coupled to different target apparatuses, operating frequencies of the resonant circuit 21 are different, and direct current signals output by the rectifier module 25 are also different. Before data transmission, the first coding mode needs to be first determined. Therefore, when the control module 22 is connected to the first end or the second end of the resonant circuit 21, the control module 22 can determine the first coding mode based on the operating frequency of the resonant circuit 21, and obtain the corresponding to-be-encoded data. For example, when the induction apparatus is coupled to the wireless charging transmitting device to implement a wireless charging function, an initial operating frequency of the resonant circuit 21 is 140 kHz (kilohertz). When the induction apparatus is coupled to the card reader to implement a function of emulating the low-frequency RFID card, an operating frequency of the resonant circuit 21 is 125 kHz. In this case, the control module 22 can determine, by detecting the operating frequency of the resonant circuit 21, a function that needs to be currently implemented by the induction apparatus, to determine the first coding mode.

Alternatively, when the control module 22 is connected to the output end of the rectifier module 25, the control module 22 may determine the first coding mode based on the direct current signal output by the output end of the rectifier module 25, and obtain the corresponding to-be-encoded data. For example, when the induction apparatus is coupled to the wireless charging transmitting device to implement a wireless charging function, a direct current signal output by the rectifier module 25 is greater than a preset threshold. When the induction apparatus is coupled to the card reader to implement a function of emulating the low-frequency RFID card, a direct current signal output by the rectifier module 25 is less than a preset threshold. In this case, the control module 22 can determine, by detecting whether the direct current signal output by the rectifier module 25 is greater than the preset threshold, a function that needs to be currently implemented by the induction apparatus, to determine the first coding mode.

In a possible implementation, after determining the first coding mode, the control module 22 obtains to-be-encoded data corresponding to first coding modes in different manners based on the different first coding modes. When the first coding mode is the wireless charging coding mode, the to-be-encoded data corresponding to the wireless charging coding mode is a wireless charging related parameter. The to-be-encoded data is not stored in the storage medium, but is calculated by the control module 22 based on the wireless charging state. In this case, the control module 22 needs to calculate the to-be-encoded data based on the current charging state of the battery in the induction apparatus, and then encode the to-be-encoded data in the wireless charging coding mode, to obtain the encoded data. When the first coding mode is the radio frequency identification coding mode, the to-be-encoded data is card number related information, and the to-be-encoded data may be prestored in the storage medium in the induction apparatus. The control module 22 may read the to-be-encoded data from the storage medium, and encode the to-be-encoded data in the radio frequency identification coding mode.

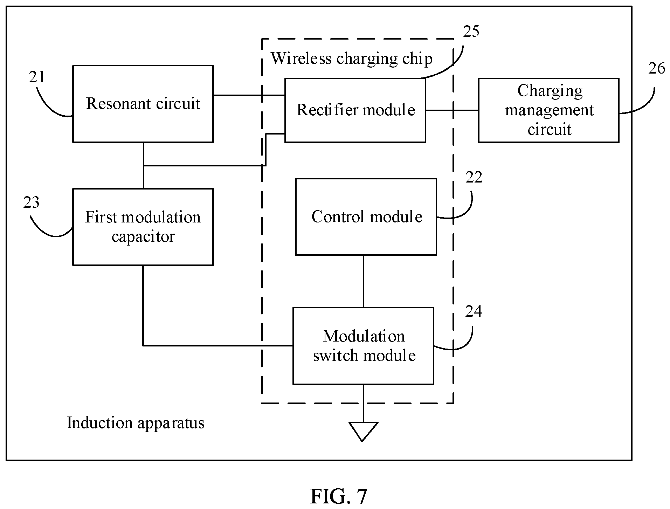

In a possible implementation, the control module 22, the rectifier module 25, and the modulation switch module 24 are integrated into a wireless charging chip, as shown in FIG. 7. That is, the induction apparatus reuses a plurality of wireless transmission functions by using the wireless charging chip in the induction apparatus. In a possible implementation, the wireless charging chip can implement both a wireless charging function and a radio frequency identification function.

It should be noted that the wireless charging chip includes a first storage module, and the induction apparatus also includes a second storage module. Therefore, when the to-be-encoded data is stored in the storage medium, the to-be-encoded data may be directly stored in the first storage module, and the to-be-encoded data may be stored in the second storage module. This is not limited in this application.

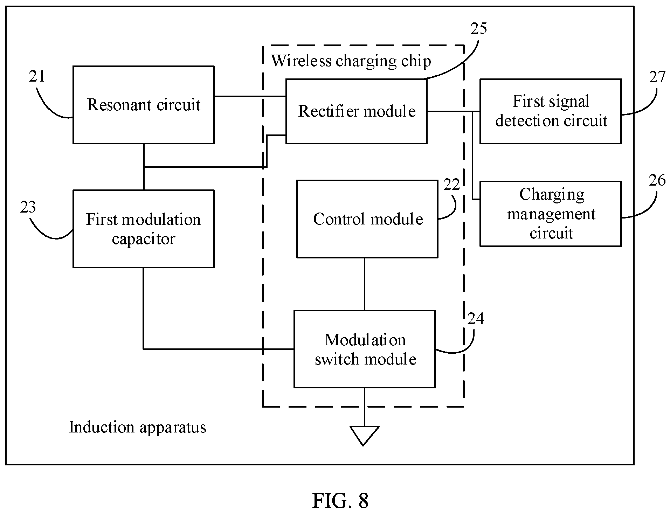

In a possible implementation, as shown in FIG. 8, the induction apparatus further includes a first signal detection circuit 27. The first signal detection circuit 27 is connected to the output end of the rectifier module 25.

The first signal detection circuit 27 is configured to generate a first signal based on the direct current signal.

The first signal indicates the charging management circuit 26 to supply power to the wireless charging chip.

Because the wireless charging chip wirelessly charges the battery in the induction apparatus, the battery does not supply power to the wireless charging chip when operating normally to supply power to the induction apparatus. The wireless charging chip supplies power to another module in the wireless charging chip based on the direct current signal generated by the rectifier module 25 in the wireless charging chip. In this embodiment of this application, for different target apparatuses, a value of the induced current generated by the resonant circuit 21 in the induction apparatus and the direct current signal output by the rectifier module 25 are different. Therefore, when the resonant circuit 21 of the induction apparatus is coupled to the target apparatus, the induced current received by the resonant circuit 21 is small. Consequently, the direct current signal converted by the rectifier module 25 is small, and an operating voltage of a module like the control module 22 in the wireless charging chip cannot be reached. If the direct current signal output by the rectifier module 25 supplies power to a module like the control module 22 in the wireless charging chip, another module like the control module 22 in the wireless charging chip cannot be started. To ensure that the another module like the control module 22 in the wireless charging chip operates normally, the charging management circuit 26 of the induction apparatus may reversely supply power to the wireless charging chip. In this case, the first signal detection circuit 27 can generate the first signal based on the direct current signal, to indicate the charging management circuit 26 to supply power to the wireless charging chip, and enable a module like the control module 22 in the wireless charging chip can be normally started. For example, when the induction apparatus is coupled to the card reader, an induction current generated by the resonant circuit 21 is small, and in this case, a direct current signal converted by the rectifier module 25 in the wireless charging chip is also small. Consequently, another module in the wireless charging chip cannot be normally started. In this case, the first signal detection circuit 27 can detect the direct current signal, and generate the first signal when detecting that the direct current signal is small, to indicate the charging management circuit 26 to supply power to the wireless charging chip. After receiving the first signal, the charging management circuit 26 may reversely supply power to the wireless charging chip, to trigger a module like the control module 22 in the wireless charging chip to start, to send the card number information to the card reader.

In a possible implementation, the first signal detection circuit 27 is specifically configured to: detect whether the direct current signal is greater than a first preset threshold and less than a second preset threshold; and when the direct current signal is greater than the first preset threshold and less than the second preset threshold, generate the first signal.

In this embodiment of this application, after obtaining the direct current signal by using the rectifier module 25, the first signal detection circuit 27 may compare the direct current signal with the first preset threshold and the second preset threshold. When the direct current signal is greater than the first preset value and less than the second preset threshold, it indicates that the current direct current signal is less than the operating voltage of the wireless charging chip, and cannot trigger startup of the module like the control module 22 in the wireless charging chip. In this case, the first signal detection circuit 27 generates the first signal, to indicate the charging management circuit 26 to reversely supply power to the wireless charging chip.

It should be noted that the first preset threshold and the second preset threshold are preset according to an actual requirement. The first preset threshold may be 0 amperes.

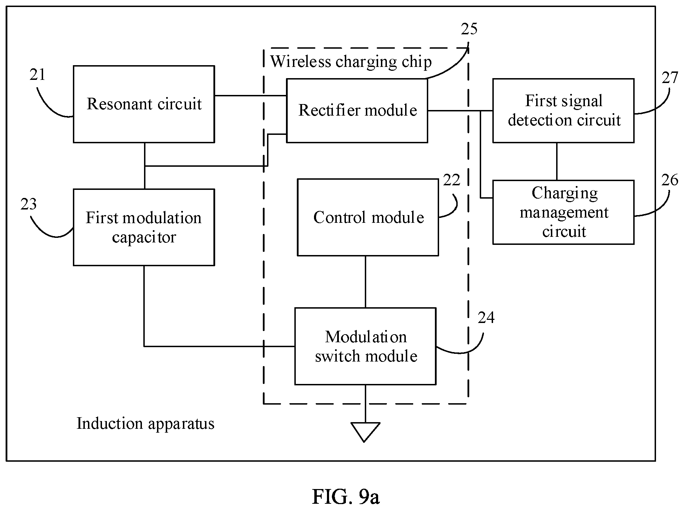

In a possible implementation, the first signal detection circuit 27 is further connected to the charging management circuit 26, as shown in FIG. 9a. That is, the first signal detection circuit is directly connected to the charging management circuit 26. In this case, after generating the first signal, the first signal detection circuit 27 may directly send the first signal to the charging management circuit 26.

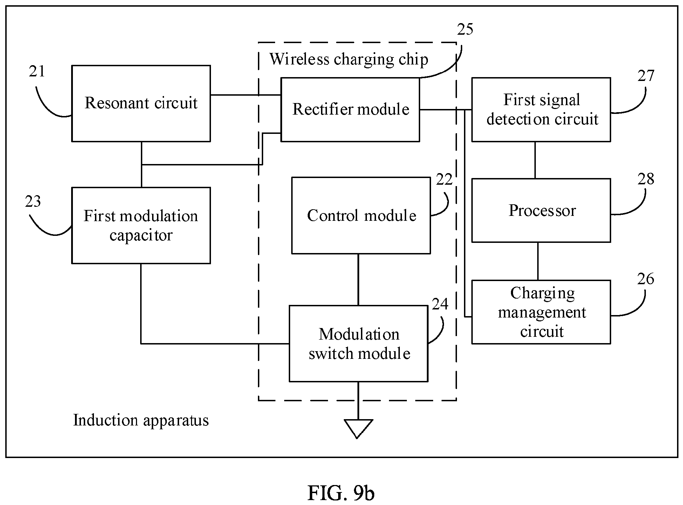

Alternatively, in a possible implementation, as shown in FIG. 9b, the induction apparatus further includes a processor 28. The processor 28 is connected to the first signal detection circuit 27, and the processor 28 is connected to the charging management circuit 26.

The processor 28 is configured to: receive the first signal, and send a second signal to the charging management circuit 26.

The second signal indicates the charging management circuit 26 to supply power to the wireless charging chip.

In this embodiment of this application, because connection pins of the charging management circuit 26 are limited, the first signal detection circuit 27 may not be directly connected to the charging management circuit 26. In this case, the first signal detection circuit 27 may be connected to the processor 28, and the processor 28 is connected to the charging management circuit 26. In this way, the first signal detection circuit 27 can send the first signal to the processor 28, and the processor 28 can generate the second signal based on the first signal, and send the second signal to the charging management circuit 26, so that after receiving the second signal, the charging management circuit 26 learns that power needs to be supplied to the wireless charging chip, and may control the battery to supply power to the wireless charging chip through reverse power supply.

In a possible implementation, the first signal may be an interrupt signal.

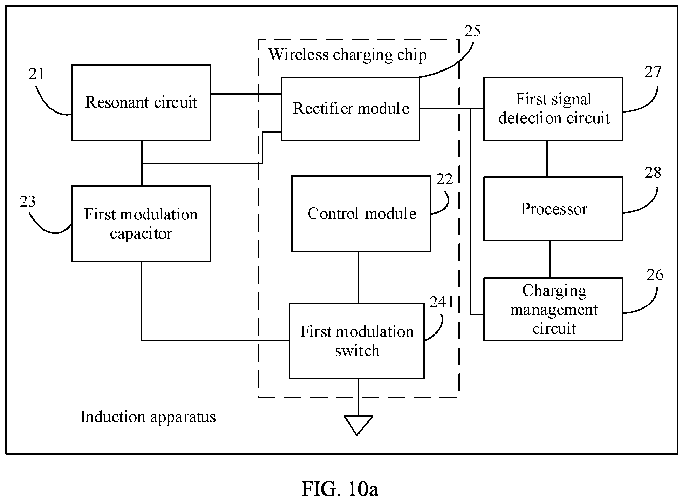

In a possible implementation, as shown in FIG. 10a, the modulation switch module 24 includes a first modulation switch 241. A first end of the first modulation switch 241 is connected to the other end of the first modulation capacitor 23, a second end of the first modulation switch 241 is grounded, and a control end of the first modulation switch 241 is connected to the control module 22.

The wireless charging protocol specifies that an internal clock of the wireless charging chip is 2 kHz (kilohertz), and a differential Manchester coding mode is used to modulate data bits to power signals transmitted by the wireless charging transmitting device and the wireless charging receiving device. Therefore, in this embodiment of this application, one end of the first modulation capacitor 23 is connected to the first end of the resonant circuit 21, the other end of the first modulation capacitor 23 is connected to the first end of the first modulation switch 241, the second end of the first modulation switch 241 is grounded, and the control end of the first modulation switch 241 is connected to the control module 22. In this way, when obtaining the encoded data, the control module 22 can convert the encoded data into a control signal of the first modulation switch 241, to transmit the control signal to the control end of the first modulation switch 241 and control turn-on/turn-off of the first modulation switch 241. When the control signal controls the first modulation switch 241 to be turned on, a connection path between the first modulation capacitor 23 and the first end of the resonant circuit 21 is connected. When the control signal controls the first modulation switch 241 to be turned off, a connection path between the first modulation capacitor 23 and the first end of the resonant circuit 21 is disconnected. In this way, in the induction apparatus, the control module 22 controls whether the first modulation capacitor 23 is connected to the first end of the resonant circuit 21, to adjust the voltage amplitude of the resonant circuit 21.

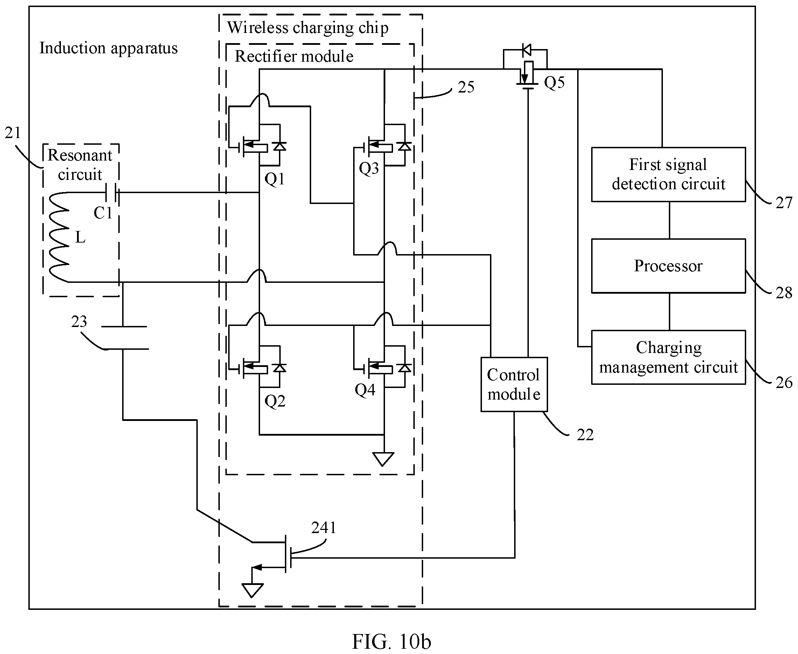

In a possible implementation, the first modulation switch 241 is a switch transistor, as shown in FIG. 10b. In this way, connection/disconnection of the connection path between the first modulation capacitor 23 and the first end of the resonant circuit 21 are switched by controlling turn-on/turn-off of the first modulation switch 241, and the implementation is simple.

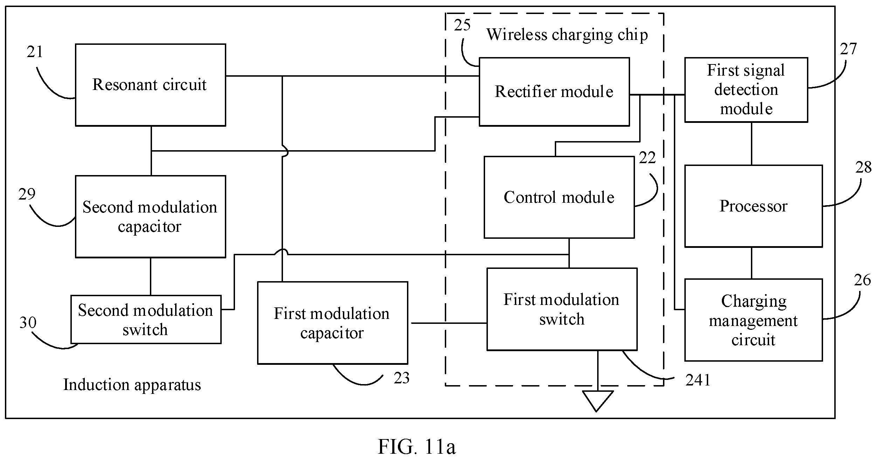

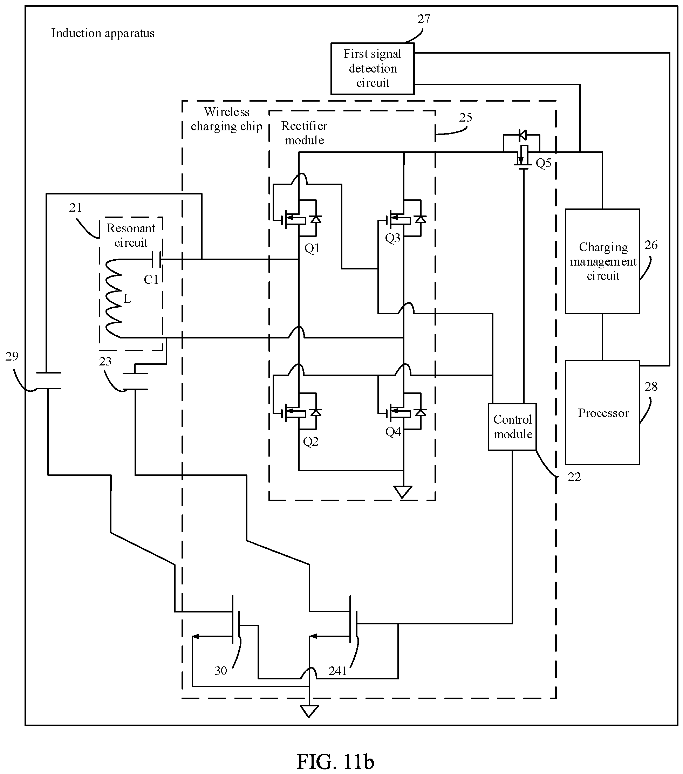

In a possible implementation, as shown in FIG. 11a and FIG. 11b, the induction apparatus further includes a second modulation capacitor 29 and a second modulation switch 30.

One end of the second modulation capacitor 29 is connected to the second end of the resonant circuit 21, the other end of the second modulation capacitor 29 is connected to a first end of the second modulation switch 30, the second end of the second modulation switch 30 is grounded, and a control end of the second modulation switch 30 is connected to the control module 22.

The control module 22 is further configured to control turn-on/turn-off of the second modulation switch 30 based on the encoded data.

In this case, the resonant circuit 21 is specifically configured to send coding information to the target apparatus based on turn-on/turn-off of the modulation switch module 24 and the second modulation switch 30.

In this embodiment of this application, to improve stability of the modulation signal and enhance communication effect, the second modulation capacitor 29 and the second modulation switch 30 may be disposed in the induction apparatus. One end of the second modulation capacitor 29 is connected to the second end of the resonant circuit 21, the other end of the second modulation capacitor 29 is connected to the first end of the second modulation switch 30, the second end of the second modulation switch 30 is grounded, and the control module 22 is connected to the control end of the second modulation switch 30. In this way, the control module 22 can also control turn-on/turn-off of the second modulation switch 30 based on the encoded data. When the second modulation switch 30 is turned on, that is, the first end and the second end of the second modulation switch 30 are turned on, the second end of the resonant circuit 21 is grounded through the second modulation capacitor 29 and the second modulation switch 30, that is, a connection path between the second modulation capacitor 29 and the resonant circuit 21 is connected. When the second modulation switch 30 is turned off, that is, the first end and the second end of the second modulation switch 30 are turned off, a connection path between the second modulation capacitor 29 and the resonant circuit 21 is disconnected. In this way, the control module 22 can simultaneously control turn-on/turn-off of the first modulation switch 241 and the second modulation switch 30 based on the encoded data, to enhance the change of the voltage amplitude of the resonant circuit 21, enable the target apparatus to more easily detect the change information of the voltage amplitude, and more accurately decode the encoded data sent by the induction apparatus.

In a possible implementation, the control module 22 controls, based on the encoded data, turn-on/turn-off state of the first modulation switch 241/turn-on/turn-off of the second modulation switch 30 to be completely the same. That is, the first modulation switch 241 and the second modulation switch 30 are the same switches, and control signals sent by the control module 22 to the control end of the first modulation switch 241 and the control end of the second modulation switch 30 are the same, to simultaneously control turn-on/turn-off of the first modulation switch 241 and the second modulation switch 30.

In a possible implementation, the second modulation switch 30 is integrated into the wireless charging chip, as shown in FIG. 11b.

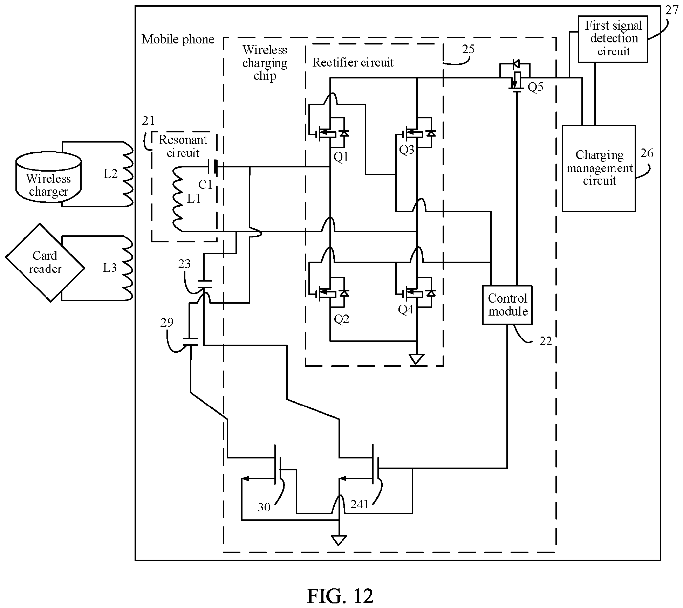

For example, as shown in FIG. 12, it is assumed that the induction apparatus is a mobile phone. In this example, an example in which the first signal detection circuit 27 sends the first signal to the charging management circuit 26 is used for description. The mobile phone includes a resonant circuit 21, a first modulation capacitor 23, a second modulation capacitor 29, a first signal detection circuit 27, a charging management circuit 26, and a wireless charging chip. The wireless charging chip includes a rectifier module 25, a control module 22, a first modulation switch 241, and a second modulation switch 30. The rectifier module 25 forms a rectifier bridge circuit by using switch transistors Q1 to Q4. A first end of the resonant circuit 21 and one end of the first modulation capacitor 23 are connected to a first input end of the rectifier module 25, and a second end of the resonant circuit 21 is connected to one end of the second modulation capacitor 29 and a second input end of the rectifier module 25. The control module 22 is connected to control ends of the switch transistors Q1 to Q4, and the control module 22 is separately connected to a control end of the first modulation switch 241 and a control end of the second modulation switch 30. The other end of the first modulation capacitor 23 is connected to a first end of the first modulation switch 241, the other end of the second modulation capacitor 29 is connected to a first end of the second modulation switch 30, and a second end of the first modulation switch 241 and a second end of the second modulation switch 30 are both grounded. The first signal detection circuit 27 is connected to an output end of the rectifier module 25, and the first signal detection circuit 27 is connected to the charging management circuit 26.

When the resonant circuit 21 of the mobile phone is coupled to a wireless charger, a transmitting coil of the wireless charger generates an alternating magnetic field. In this case, the resonant circuit 21 of the mobile phone generates an induced current in the alternating magnetic field, and transmits the induced current to the rectifier module 25. The rectifier module 25 rectifies the induced current into a direct current signal, and outputs the direct current signal. The first signal detection circuit 27 detects whether the direct current signal output by the rectifier module 25 is greater than a first preset threshold and less than a second preset threshold. Because the direct current signal output by the rectifier module 25 is used to charge a battery of the mobile phone, the value of the direct current signal is large, and is greater than the second preset value. If the first signal detection circuit 27 detects that the direct current signal is greater than the second preset threshold, it indicates that the direct current signal output by the rectifier module 25 can reach an operating voltage of the wireless charging chip, so that the control module 22 can be triggered to start. In this case, the direct current signal output by the rectifier module 25 can supply power to the wireless charging chip, to trigger the control module 22 to start. In addition, the direct current signal output by the rectifier module 25 supplies power to each load of the mobile phone, and the direct current signal is transmitted to the battery of the mobile phone through the charging management circuit 26 to charge the battery of the mobile phone. The control module 22 may obtain the direct current signal output by the rectifier module 25, to determine, based on the direct current signal, that the mobile phone is currently performing wireless charging. In this case, the control module 22 determines that a wireless charging coding mode is a first coding mode in at least two preset coding modes. To-be-encoded data, such as charging power and a charging type, is calculated based on related information such as battery level and battery voltage of the mobile phone. The control module 22 encodes the to-be-encoded data based on the first coding mode to obtain encoded data. The control module 22 may output a control signal to the control ends of the first modulation switch 241 and the second modulation switch 30 based on the encoded data, to control turn-on/turn-off of the first modulation switch 241 and the second modulation switch 30. It is assumed that both the first modulation switch 241 and the second modulation switch 30 are switches that are turned on when the control end receives a high level and switches that are turned off when the control end receives a low level, and the encoded data is binary data. In this case, the control module 22 may send a high-level signal or a low-level signal to the control ends of the first modulation switch 241 and the second modulation switch 30 based on the encoded data, to control turn-on/turn-off of the first modulation switch 241 and the second modulation switch 30. For example, when the encoded data is 1, the high level signal is sent to the control ends of the first modulation switch 241 and the second modulation switch 30; and when the encoded data is 0, the low level signal is sent to the control ends of the first modulation switch 241 and the second modulation switch 30. When the first modulation switch 241 and the second modulation switch 30 are turned on, a connection path between the first modulation capacitor 23 and the first end of the resonant circuit 21 is connected, and a connection path between the second modulation capacitor 29 and the second end of the resonant circuit 21 is connected. When the control signal controls the first modulation switch 241 and the second modulation switch 30 to be turned off, a connection path between the first modulation capacitor 23 and the first end of the resonant circuit 21 is disconnected, and a connection path between the second modulation capacitor 29 and the second end of the resonant circuit 21 is disconnected. In this way, in the mobile phone, the control module 22 controls whether the first modulation capacitor 23 is connected to the first end of the resonant circuit 21 and whether the second modulation capacitor 29 is connected to the first end of the resonant circuit 21, to implement modulation of a voltage amplitude of the resonant circuit 21, and to change a voltage gain of the entire mobile phone, so that the wireless charger generates corresponding voltage amplitude adjustment, and can perform demodulation based on change information of the voltage amplitude, and obtain, through decoding, data sent by the mobile phone.

When the resonant circuit 21 of the mobile phone is coupled to a card reader, a transmitting coil of the card reader generates an alternating magnetic field, and the resonant circuit 21 of the mobile phone generates an induced current in the alternating magnetic field, and transmits the induced current to the rectifier module 25. The rectifier module 25 rectifies the induced current, converts the rectified induced current into a direct current signal, and outputs the direct current signal. The first signal detection circuit 27 may obtain the direct current signal from the rectifier module 25, and detect whether the direct current signal is greater than the first preset threshold and less than the second preset threshold. It is assumed that the first signal detection circuit 27 detects that the direct current signal is greater than the first preset threshold and less than the second preset threshold, it indicates that the direct current signal output by the rectifier module 25 cannot reach the operating voltage of the wireless charging chip, and therefore the control module 22 cannot be triggered to start. In this case, the first signal detection circuit 27 sends a first signal to the charging management circuit 26. The first signal may be an interrupt signal. After receiving the first signal, the charging management circuit 26 controls the battery to supply power to the wireless charging chip, to trigger the control module 22 to start. After being started, the control module 22 determines, by detecting a magnitude of the direct current signal output by the rectifier module 25, that the mobile phone is currently performing a function of emulating a low-frequency RFID card. In this case, the control module 22 determines, in the at least two preset coding modes, that a radio frequency identification coding mode is the first coding mode. The control module 22 may obtain the to-be-encoded data from a storage medium, that is, obtain prestored card number information. The control module 22 encodes the to-be-encoded data based on the first coding mode to obtain encoded data. The control module 22 may output a control signal to the control ends of the first modulation switch 241 and the second modulation switch 30 based on the encoded data, to control turn-on/turn-off of the first modulation switch 241 and the second modulation switch 30. That is, the control module 22 may send a high-level signal or a low-level signal to the control ends of the first modulation switch 241 and the second modulation switch 30 based on the encoded data, to control turn-on/turn-off of the first modulation switch 241 and the second modulation switch 30. When the first modulation switch 241 and the second modulation switch 30 are turned on, a connection path between the first modulation capacitor 23 and the first end of the resonant circuit 21 is connected, and a connection path between the second modulation capacitor 29 and the second end of the resonant circuit 21 is connected. When the control signal controls the first modulation switch 241 and the second modulation switch 30 to be turned off, a connection path between the first modulation capacitor 23 and the first end of the resonant circuit 21 is disconnected, and a connection path between the second modulation capacitor 29 and the second end of the resonant circuit 21 is disconnected. In this way, in the mobile phone, the control module 22 controls whether the first modulation capacitor 23 is connected to the first end of the resonant circuit 21 and whether the second modulation capacitor 29 is connected to the first end of the resonant circuit 21, to implement modulation of a voltage amplitude of the resonant circuit 21, and to change a voltage gain of the entire mobile phone, so that the wireless charger generates corresponding voltage amplitude adjustment, and can perform demodulation based on change information of the voltage amplitude, and obtain, through decoding, the card number information sent by the mobile phone.

In the foregoing embodiment, the control module 22 is integrated into the wireless charging chip. In this case, the wireless charging chip can implement a wireless charging function, and also at least implement a radio frequency identification function. Certainly, the wireless charging function and the radio frequency identification function may be separately implemented by using different components in the induction apparatus, which are specifically described below.

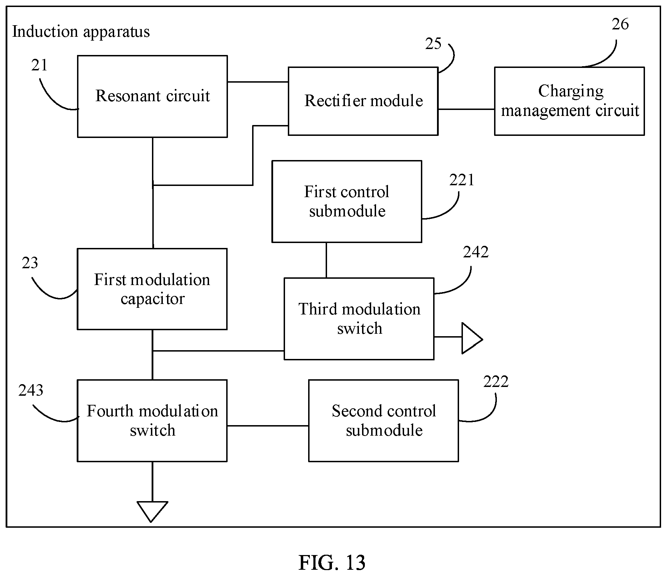

In a possible implementation, as shown in FIG. 13, the control module 22 includes a first control submodule 221 and a second control submodule 222. The modulation switch module 24 includes a third modulation switch 242 and a fourth modulation switch 243.

A first end of the third modulation switch 242 and a first end of the fourth modulation switch 243 are both connected to the other end of the first modulation capacitor 23, a second end of the third modulation switch 242 and a second end of the fourth modulation switch 243 are both grounded, a control end of the third modulation switch 242 is connected to the first control submodule 221, and a control end of the fourth modulation switch 243 is connected to the second control submodule 222.

The first control submodule 221 is configured to: obtain first to-be-encoded data in response to a received first trigger signal, encode the first to-be-encoded data based on a preset second coding mode to obtain first encoded data, and control turn-on/turn-off of the third modulation switch 242 based on the first encoded data.

The second control submodule 222 is configured to: obtain second to-be-encoded data in response to a received second trigger signal, encode the second to-be-encoded data based on a preset third coding mode to obtain second encoded data, and control turn-on/turn-off of the fourth modulation switch 243 based on the second encoded data.

The resonant circuit 21 is specifically configured to: send first coding information to the target apparatus based on turn-on/turn-off of the third modulation switch 242; and send second coding information to the target apparatus based on turn-on/turn-off of the fourth modulation switch 243.

The first coding information is used to provide the first encoded data to the target apparatus. The second coding information is used to provide the second encoded data to the target apparatus.

In this embodiment of this application, when different functions are implemented by using different components in the induction apparatus, the control module 22 may be divided into the first control submodule 221 and the second control submodule 222. In this case, the modulation switch module 24 is divided into the third modulation switch 242 and the fourth modulation switch 243. In addition, one end of the third modulation switch 242 is connected to the other end of the first modulation capacitor 23, the other end of the third modulation switch 242 is grounded, and the control end of the third modulation switch 242 is connected to the first control submodule 221. In this way, the first control submodule 221 obtains the first to-be-encoded data in response to the received first trigger signal, and encodes the first to-be-encoded data based on the preset second coding mode to obtain the first encoded data. In addition, a control signal may be sent to the control of the third modulation switch 242 based on the first encoded data, to control turn-on/turn-off of the third modulation switch 242. When the third modulation switch 242 is turned on, a connection path between the first modulation capacitor 23 and the first end of the resonant circuit 21 is connected. When the third modulation switch 242 is turned off, a connection path between the first modulation capacitor 23 and the first end of the resonant circuit 21 is disconnected. In this case, the resonant circuit 21 may send the first coding information to the target apparatus based on turn-on/turn-off of the third modulation switch 242. The target apparatus may parse out the first encoded data based on the first coding information.

One end of the fourth modulation switch 243 is connected to the other end of the first modulation capacitor 23, the other end of the fourth modulation switch 243 is grounded, and the control end of the fourth modulation switch 243 is connected to the second control submodule 222. In this way, the second control submodule 222 obtains the second to-be-encoded data in response to the received second trigger signal, and encodes the second to-be-encoded data based on the preset second coding mode to obtain the second encoded data. In addition, a control signal may be sent to the control of the fourth modulation switch 243 based on the second encoded data, to control turn-on/turn-off of the fourth modulation switch 243. When the fourth modulation switch 243 is turned on, a connection path between the first modulation capacitor 23 and the first end of the resonant circuit 21 is connected. When the fourth modulation switch 243 is turned off, a connection path between the first modulation capacitor 23 and the first end of the resonant circuit 21 is disconnected. In this case, the resonant circuit 21 may send the second coding information to the target apparatus based on turn-on/turn-off of the fourth modulation switch 243. The target apparatus may parse out the second encoded data based on the second coding information.

The first coding mode and the second coding mode are different coding modes. In this way, the induction apparatus can implement different functions by reusing the resonant circuit and the first modulation capacitor.

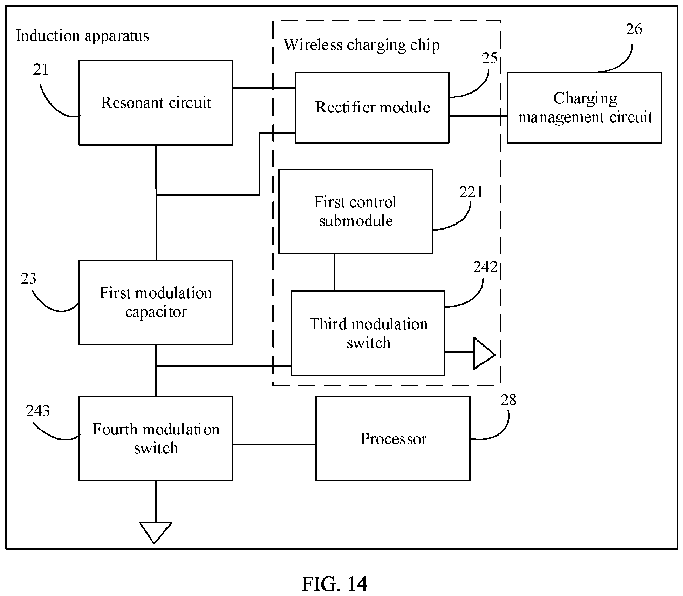

In a first possible implementation, as shown in FIG. 14, the first control submodule 221 and the third modulation switch 242 are integrated into the wireless charging chip, and the second control submodule 222 includes a processor 28.

In this way, at least two wireless transmission functions of the induction apparatus can be separately implemented by using the wireless charging chip and the processor 28.

In a possible implementation, the preset first coding mode includes a wireless charging coding mode, and the preset second coding mode includes a radio frequency identification coding mode.

In this embodiment of this application, a wireless charging function may be implemented by using the wireless charging chip, and a radio frequency identification function may be implemented by using the processor 28. In this case, the first coding mode is a wireless charging coding mode, and the second coding mode is a radio frequency identification coding mode. In this way, when the induction apparatus implements different functions, different components may be triggered to perform corresponding processing. For example, when the induction apparatus needs to perform wireless charging, the first control submodule 221 in the wireless charging chip is started in response to the first trigger signal. After the resonant circuit 21 of the induction apparatus generates an induced current, the induced current is transmitted to the rectifier module 25. The rectifier module 25 converts the induced current into a direct current signal and outputs the direct current signal, to charge a component like a battery in the induction apparatus. The first control submodule 221 in the wireless charging chip may calculate data such as a charging load and charging power in a wireless charging process, use the data as the first to-be-encoded data, and encode the first to-be-encoded data in the wireless charging coding mode, to obtain the first encoded data. The first control submodule 221 in the wireless charging chip generates a control signal based on the first encoded data, and sends the control signal to the control end of the third modulation switch 242, to control turn-on/turn-off of the third modulation switch 242. When the third modulation switch 242 is turned on, a connection path between the first modulation capacitor 23 and the first end of the resonant circuit 21 is connected. When the third modulation switch 242 is turned off, a connection path between the first modulation capacitor 23 and the first end of the resonant circuit 21 is disconnected. Whether the first modulation capacitor 23 is connected to the first end of the resonant circuit 21 is controlled, to change a voltage amplitude of the resonant circuit 21. The voltage amplitude may be used as the first coding information, and the resonant circuit 21 sends the first coding information to a wireless charging transmitting device, so that the wireless charging transmitting device decodes, based on the first coding information, that is, based on change information of the voltage amplitude, the data sent by the induction apparatus.

When the induction apparatus needs to implement the radio frequency identification function, for example, implement a function of emulating a low-frequency RFID card, after the resonant circuit 21 of the induction apparatus generates an induced current, the induced current is transmitted to the rectifier module 25. The rectifier module 25 converts the induced current into a direct current signal and outputs the direct current signal. In response to the second trigger signal, the processor 28 may obtain the card number information from the storage medium, use the card number information as the second to-be-encoded data, and encode the second to-be-encoded data in the radio frequency identification coding mode to obtain the second encoded data. The processor 28 generates a control signal based on the second encoded data, and sends the control signal to the control end of the fourth modulation switch 243, to control turn-on/turn-off of the fourth modulation switch 243. When the fourth modulation switch 243 is turned on, a connection path between the first modulation capacitor 23 and the first end of the resonant circuit 21 is connected. When the fourth modulation switch 243 is turned off, a connection path between the first modulation capacitor 23 and the first end of the resonant circuit 21 is disconnected. Whether the first modulation capacitor 23 is connected to the first end of the resonant circuit 21 is controlled, to change a voltage amplitude of the resonant circuit 21. The voltage amplitude may be used as the first coding information, and the resonant circuit 21 sends the first coding information to a wireless charging transmitting device, so that the wireless charging transmitting device decodes, based on the first coding information, that is, based on change information of the voltage amplitude, a card number sent by the induction apparatus.

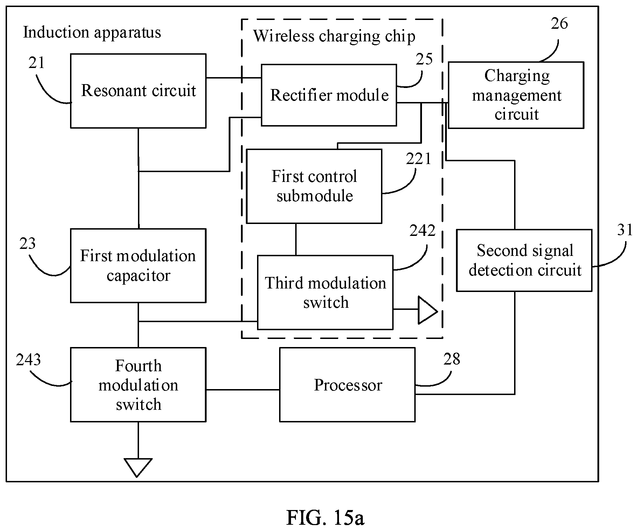

In a possible implementation, as shown in FIG. 15a, the induction apparatus further includes a second signal detection circuit 31.

The second signal detection circuit 31 is connected to the output end of the rectifier module 25 and the second control submodule 222.

The second signal detection circuit 31 is configured to send the second trigger signal to the second control submodule 222 based on the direct current signal.

In this embodiment of this application, when the second control submodule 222 is implemented by using the processor 28, after the induction apparatus is coupled to different target apparatuses, direct current signals output by the rectifier module 25 are different. Therefore, a function that needs to be implemented by the induction apparatus can be determined based on the direct current signal output by the rectifier module 25, to trigger different control modules to operate. A value of a direct current signal output by the rectifier module 25 in a wireless charging application is large, and is usually larger than a voltage withstand range of the processor 28. Therefore, the processor 28 cannot directly obtain the direct current signal output by the rectifier module 25 for detection. In this case, detection may be performed by using the second signal detection circuit 31. That is, the second signal detection circuit 31 obtains the direct current signal output by the rectifier module 25, and detects whether the direct current signal is greater than a third preset threshold. If the direct current signal is not greater than the third preset threshold, it is considered that the radio frequency identification function is implemented. In this case, the second trigger signal is sent to the processor 28. The second trigger signal may be an interrupt signal, or may be another trigger signal.

The third preset threshold is preset, and is less than a direct current signal during wireless charging.

In a possible implementation, the first control submodule 221 may be directly connected to the rectifier module 25, as shown in FIG. 15a. In this case, the first control submodule 221 can determine, based on whether a direct current signal output by the rectifier module 25 can trigger the first control submodule 221 to start, whether the induction apparatus currently implements the wireless charging function. In this case, the first trigger signal received by the first control submodule 221 is a direct current signal. When the direct current signal is an electrical signal greater than the third preset threshold, the direct current signal may trigger the first control submodule 221 to start, and the first control submodule 221 may determine that the induction apparatus currently implements the wireless charging function. When the direct current signal is an electrical signal not greater than the third preset threshold, the direct current signal cannot trigger the first control submodule 221 to start. In this case, the induction apparatus does not implement the wireless charging function. Alternatively, a startup voltage of the first control submodule 221 is less than the third preset threshold. When the induction apparatus implements the radio frequency identification function, the direct current signal output by the rectifier module 25 may also trigger the first control submodule 221 to start. In this case, the first control submodule 221 may detect whether the direct current signal that is output by the rectifier module 25 and that is received by the first control submodule 221 is greater than the third preset threshold, to determine whether the induction apparatus implements the wireless charging function.

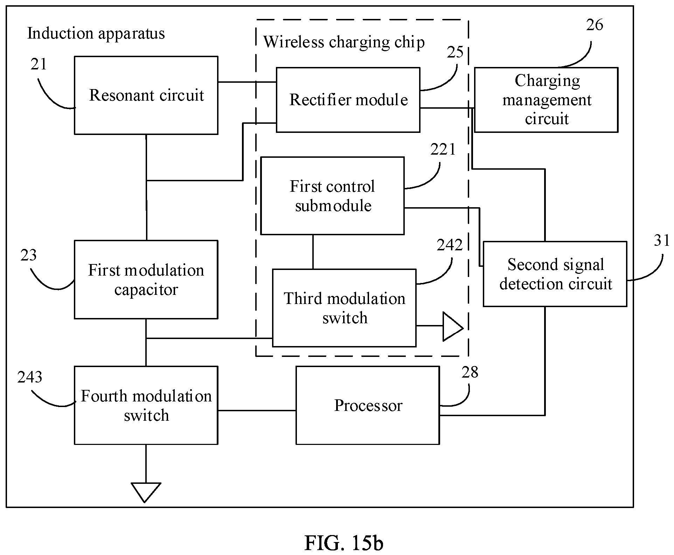

Alternatively, the second signal detection circuit 31 is further connected to the first control submodule 221, as shown in FIG. 15b. In this case, the second signal detection circuit 31 is further configured to send the first trigger signal to the first control submodule 221 based on the direct current signal.

In this embodiment of this application, when the first control submodule 221 is integrated into the wireless charging chip, the first control submodule 221 may be directly connected to the output end of the rectifier module 25, to obtain a direct current signal, and to detect, based on the direct current signal, whether a function currently implemented by the resistor device is the wireless charging function. Alternatively, whether a function currently implemented by the induction apparatus is the wireless charging function may be detected by using the second signal detection circuit 31. In this case, after obtaining the direct current signal output by the output end of the rectifier module 25, the second signal detection circuit 31 compares the direct current signal with the third preset threshold, and when the direct current signal is not greater than the third preset threshold, determines that the induction apparatus implements the radio frequency identification function, and sends the second trigger signal to the second control submodule 222. When it is detected that the direct current signal is greater than the third preset threshold, it is determined that the induction apparatus implements the wireless charging function, and the first trigger signal is sent to the first control submodule 221. The first trigger signal may be an electrical signal, to trigger the first control submodule 221 to start.

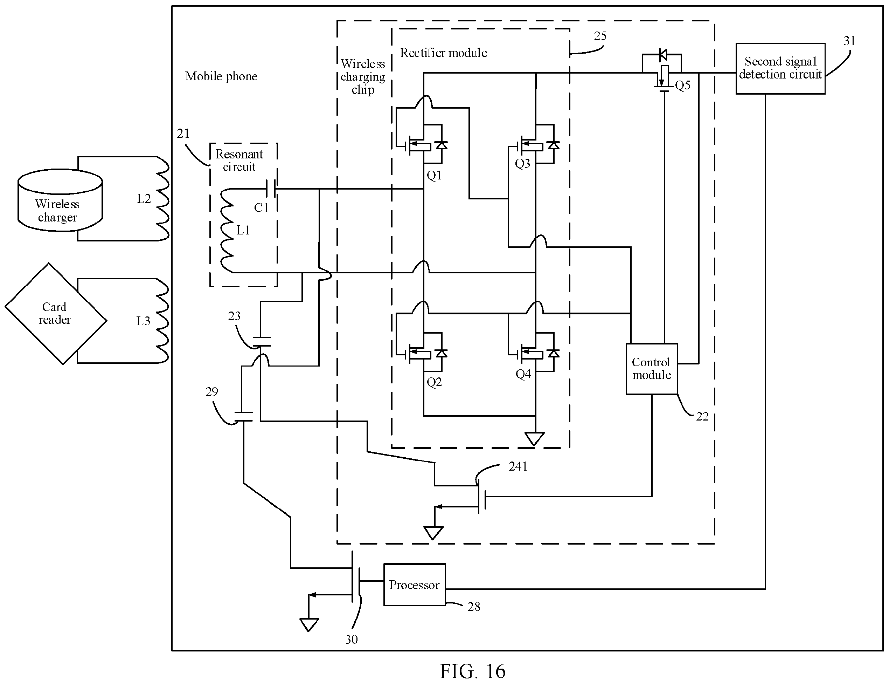

For example, it is assumed that the induction apparatus is a mobile phone. As shown in FIG. 16, the mobile phone includes a resonant circuit 21, a first modulation capacitor 23, a fourth modulation switch 243, a second signal detection circuit 31, a processor 28, and a wireless charging chip. The wireless charging chip includes a rectifier module 25, a first control submodule 221, and a third modulation switch 242. The rectifier module 25 forms a rectifier bridge circuit by using switch transistors Q1 to Q4. A first end of the resonant circuit 21 and one end of the first modulation capacitor 23 are connected to a first input end of the rectifier module 25, and a second end of the resonant circuit 21 is connected to a second input end of the rectifier module 25. The first control submodule 221 is connected to control ends of the switch transistors Q1 to Q4, and the first control submodule 221 is connected to a control end of the third modulation switch 242. The other end of the first modulation capacitor 23 is connected to a first end of the third modulation switch 242 and a first end of the fourth modulation switch 243. A second end of the third modulation switch 242 and a second end of the fourth modulation switch 243 are both grounded. The second signal detection module 31 is connected to an output end of the rectifier module 25, and the second signal detection circuit 31 is connected to the processor 28. The processor 28 is connected to a control end of the fourth modulation switch 243. It is assumed that the first coding mode is a wireless charging coding mode, and the second coding mode is a radio frequency identification coding mode.

When the resonant circuit 21 of the mobile phone is coupled to a wireless charger, a transmitting coil of the wireless charger generates an alternating magnetic field. In this case, the resonant circuit 21 of the mobile phone generates an induced current in the alternating magnetic field, and transmits the induced current to the rectifier module 25. The rectifier module 25 rectifies the induced current into a direct current signal, and outputs the direct current signal. The second signal detection circuit 31 detects whether the direct current signal output by the rectifier module 25 is greater than the third preset threshold. Because the direct current signal output by the rectifier module 25 is used to charge the induction apparatus, a value of the direct current signal is large, and is greater than the third preset value. If the second signal detection circuit 31 detects that the direct current signal is greater than the third preset threshold, it indicates that the direct current signal output by the rectifier module 25 can reach an operating voltage of the wireless charging chip, so that the control module 22 can be triggered to start. In this case, the direct current signal output by the rectifier module 25 can supply power to the wireless charging chip, and the direct current signal output by the rectifier module 25 supplies power to each load in the mobile phone, to charge the battery in the mobile phone. The electrical signal is received and startup is performed. In this case, the received electrical signal can be used as the first trigger signal. After being started, the first control submodule 221 can calculate the first to-be-encoded data, for example, data such as charging power and a charging type, based on the received data sent by the wireless charger and a charging state of the battery. The first control submodule 221 encodes the first to-be-encoded data based on a preset wireless charging coding module, to obtain encoded data. The first control submodule 221 may output a control signal to the control end of the third modulation switch 242 based on the encoded data, to control turn-on/turn-off of the third modulation switch 242. It is assumed that the third modulation switch 242 is a switch that is turned on when the control end receives a high level and a switch that is turned off when the control end receives a low level. In this case, the first control submodule 221 may send a high level signal or a low level signal to the control end of the third modulation switch 242 based on the encoded data, to control turn-on/turn-off of the third modulation switch 242. When the third modulation switch 242 is turned on, a connection path between the first modulation capacitor 23 and the first end of the resonant circuit 21 is connected. When the control signal controls the third modulation switch 242 to be turned off, a connection path between the first modulation capacitor 23 and the first end of the resonant circuit 21 is disconnected. In this way, in the mobile phone, the first control submodule 221 controls whether the first modulation capacitor 23 is connected to the first end of the resonant circuit 21, to modulate a voltage amplitude of the resonant circuit 21. The voltage amplitude may be used as the first coding information, and the resonant circuit 21 sends the first coding information to a wireless charging transmitting device, so that the wireless charging transmitting device decodes, based on the first coding information, that is, based on change information of the voltage amplitude, the data sent by the induction apparatus.

When the resonant circuit 21 of the mobile phone is coupled to a card reader, a transmitting coil of the card reader generates an alternating magnetic field, and the resonant circuit 21 of the mobile phone generates an induced current in the alternating magnetic field, and transmits the induced current to the rectifier module 25. The rectifier module 25 rectifies the induced current, converts the rectified induced current into a direct current signal, and outputs the direct current signal. The second signal detection circuit 31 may obtain the direct current signal from the rectifier module 25, and detect whether the direct current signal is greater than the third preset threshold. It is assumed that the second signal detection circuit 31 detects that the direct current signal is less than the third preset threshold, it indicates that the induction apparatus currently implements the radio frequency identification function. In this case, the second signal detection circuit 31 sends a second trigger signal to the processor 28. The second trigger signal may be an interrupt signal. The processor 28 obtains second to-be-encoded data from the storage medium in response to the received second trigger signal, that is, obtains prestored card number information. The second to-be-encoded data is encoded in the radio frequency identification coding mode to obtain encoded data. The processor 28 may output a control signal to the control end of the fourth modulation switch 243 based on the encoded data, to control turn-on/turn-off of the fourth modulation switch 243. It is assumed that the fourth modulation switch 243 is a switch that is turned on when the control end receives a high level and a switch that is turned off when the control end receives a low level. In this case, the processor 28 may send a high-level signal or a low-level signal to the control end of the fourth modulation switch 243 based on the encoded data, to control turn-on/turn-off of the fourth modulation switch 243. When the fourth modulation switch 243 is turned on, a connection path between the first modulation capacitor 23 and the first end of the resonant circuit 21 is connected. When the control signal controls the fourth modulation switch 243 to be turned off, a connection path between the first modulation capacitor 23 and the first end of the resonant circuit 21 is disconnected. In this way, in the mobile phone, the processor 28 modulates the voltage amplitude of the resonant circuit 21 by controlling whether the first modulation capacitor 23 is connected to the first end of the resonant circuit 21. The voltage amplitude may be used as the first coding information, and the resonant circuit 21 sends the first coding information to the wireless charging transmitting device, so that the wireless charging transmitting device decodes, based on the first coding information, that is, based on change information of the voltage amplitude, card number information sent by the induction apparatus.

The induction apparatus includes a resonant circuit, a first modulation capacitor, a modulation switch module, and a control module. One end of the first modulation capacitor is connected to a first end of the resonant circuit, the other end of the first modulation capacitor is connected to a first end of the modulation switch module, a second end of the modulation switch module is grounded, and a control end of the modulation switch module is connected to the control module; the control module is configured to: obtain encoded data, and control turn-on/turn-off of the modulation switch module based on the encoded data, where the encoded data is data that is encoded in one of at least two preset coding modes of the induction apparatus; and the resonant circuit is configured to send coding information to a target apparatus based on turn-on/turn-off of the modulation switch module, where the coding information is used to provide the encoded data to the target apparatus. In this way, the induction apparatus includes the resonant circuit, the first modulation capacitor, the modulation switch module, and the control module. One end of the first modulation capacitor is connected to the first end of the resonant circuit, the first end of the modulation switch module is connected to the other end of the first modulation capacitor, and the control end of the modulation switch is connected to the control module. The control module is configured to: obtain the encoded data, where the encoded data is data that is encoded in one of the at least two preset coding modes; and control turn-on/turn-off of the modulation switch module based on the encoded data. The resonant circuit can send the coding information to the target apparatus based on turn-on/turn-off of the modulation switch module, to provide the encoded data to the target apparatus, and enable the induction apparatus and the target apparatus to perform corresponding communication. That is, in this application, the induction apparatus can send, to the target apparatus through the same resonant circuit, the encoded data that is encoded in the at least two coding modes. In this way, a set of a resonant circuit and a modulation capacitor are reused for encoded data in a plurality of coding modes, and no additional resonant circuit and modulation capacitor are needed. Therefore, the induction apparatus can implement a plurality of wireless transmission functions almost without additional costs and layout areas. This enriches functions of the induction apparatus and improves user experience.

In addition, when the at least two preset coding modes include a wireless charging coding mode and a radio frequency identification coding mode, the induction apparatus can implement a wireless charging function and a radio frequency identification function by reusing the resonant circuit and the first modulation capacitor, for example, implement a function of emulating a low-frequency RFID card. In this way, a user does not need to carry the low-frequency RFID card, and the induction apparatus can implement the function of the low-frequency RFID card without additional costs and layout areas of the induction apparatus. This enriches functions of the induction apparatus and improves user experience.

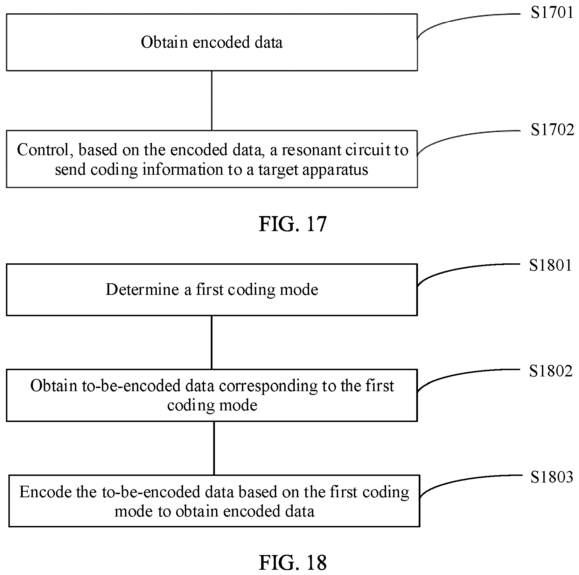

FIG. 17 is a data processing method according to an embodiment of this application, and the data processing method is applied to the induction apparatus in the foregoing embodiments. The method includes:
Step S1701: Obtain encoded data.

The encoded data is data that is encoded in one of at least two preset coding modes, and the coding mode represents a coding scheme of encoding the data.

In this embodiment of this application, the induction apparatus may implement at least two wireless transmission functions. For each wireless transmission function, a coding scheme for encoding communication data needs to be preset, and a coding scheme corresponding to one wireless transmission function is considered as one coding mode, to obtain at least two coding modes. When the induction apparatus needs to perform data communication with a target apparatus, the communication data usually needs to be encoded before being transmitted. Therefore, the communication data may be first encoded in one of the at least two coding modes to obtain encoded data.

In a first possible implementation, the at least two preset coding modes include: a wireless charging coding mode and a radio frequency identification coding mode.

In a possible implementation, as shown in FIG. 18, the obtaining encoded data includes:
S1801: Determine a first coding mode.

The first coding mode is one of the at least two preset coding modes of the induction apparatus.

In this embodiment of this application, before sending the communication data to the target apparatus, the induction apparatus needs to first determine a coding mode corresponding to the communication data. In this case, the coding mode is determined based on a wireless transmission function that the induction apparatus currently needs to implement. For example, if the induction apparatus needs to implement a wireless charging function, the wireless charging coding mode may be determined as the first coding mode. If the induction apparatus needs to implement a radio frequency identification function, the radio frequency identification coding mode may be determined as the first coding mode.

In a possible implementation, the induction apparatus may determine the first coding mode based on an operating frequency of a resonant circuit or a direct current signal output by a rectifier module.

That is, because wireless transmission functions implemented by the induction apparatus are different, operating frequencies of resonant circuits in the induction apparatus and direct current signals output by the rectifier module are different. Therefore, the induction apparatus can determine, by detecting the operating frequency of the resonant circuit or the direct current signal output by the rectifier module, the wireless transmission function that needs to be currently implemented by the induction apparatus, to determine the first coding mode. For example, the induction apparatus may detect an operating frequency of the resonant circuit. When the operating frequency of the resonant circuit is greater than a preset frequency threshold, it may be determined that the induction apparatus currently implements the wireless charging function, and the wireless charging coding mode is determined as the first coding mode. When the operating frequency of the resonant circuit is less than the preset frequency threshold, it may be determined that the induction apparatus currently implements the radio frequency identification function, and the radio frequency identification coding mode is determined as the first coding mode. Alternatively, the induction apparatus may detect a direct current signal output by the rectifier module. When the direct current signal is greater than a preset threshold of the electrical signal, it may be determined that the induction apparatus currently implements the wireless charging function, and the wireless charging coding mode is determined as the first coding mode. When the direct current signal is less than the preset threshold of the electrical signal, it may be determined that the induction apparatus currently implements the radio frequency identification function, and the radio frequency identification coding mode is determined as the first coding mode.

S1802: Obtain to-be-encoded data corresponding to the first coding mode.

In this embodiment of this application, different wireless transmission functions correspond to different target apparatuses, and communication data needed by the different target apparatuses is also different. Therefore, to-be-encoded data corresponding to each coding mode is different. When the to-be-encoded data is preset to be stored in a storage medium, the induction apparatus may directly obtain the to-be-encoded data corresponding to the first coding mode from the storage medium. When the to-be-encoded data needs to be calculated in real time, the induction apparatus may calculate, based on a currently implemented wireless transmission function, the to-be-encoded data corresponding to the first coding mode.

For example, the to-be-encoded data corresponding to the wireless charging coding mode needs to be calculated by the induction apparatus in real time, and is not stored in the storage medium. The to-be-encoded data corresponding to the radio frequency identification coding mode is preset, and may be prestored in the storage medium. Therefore, when it is determined that the first coding mode is the wireless charging coding mode, the induction apparatus needs to calculate the to-be-encoded data based on a current wireless charging state. When it is determined that the first coding mode is the radio frequency identification coding mode, the to-be-encoded data that is prestored may be directly read from the storage medium.

S1803: Encode the to-be-encoded data based on the first coding mode to obtain encoded data.

In this embodiment of this application, after the to-be-encoded data corresponding to the first coding mode is obtained, the to-be-encoded data may be encoded based on a coding scheme indicated by the first coding mode, to obtain the encoded data. For example, when the first coding mode is the wireless charging coding mode, the to-be-encoded data may be encoded based on the wireless charging coding mode to obtain the encoded data. When the first coding mode is the radio frequency identification coding mode, the to-be-encoded data may be encoded based on the radio frequency identification coding mode to obtain the encoded data.

Step S1702: Control, based on the encoded data, the resonant circuit to send coding information to the target apparatus.

The coding information is used to provide the encoded data to the target apparatus.

In this embodiment of this application, after obtaining the encoded data, the induction apparatus may control, based on the encoded data, the resonant circuit to modulate a voltage amplitude, to send the coding information to the target apparatus.

In a possible implementation, the induction apparatus may control, based on the encoded data, the resonant circuit to discharge or not to discharge, to modulate a voltage amplitude of the resonant circuit, and send the coding information to the target apparatus. For example, the induction apparatus may control, based on the encoded data, the resonant circuit to be grounded or not to be grounded, to control whether the resonant circuit discharges, modulate a voltage amplitude of the resonant circuit, and send the coding information to the target apparatus.

It should be noted that, in this embodiment, only step S1701 and step S1702 implemented by the induction apparatus are briefly described. For a specific detailed implementation process, refer to the foregoing embodiment of the induction apparatus, and details are not described herein again.

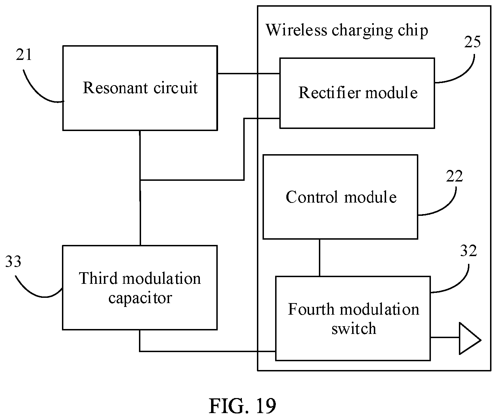

FIG. 19 is a wireless charging chip according to an embodiment of this application. The wireless charging chip includes a rectifier module 25, a fourth modulation switch 32, and a control module 22.

A first end of the fourth modulation switch 32 is configured to be externally connected to a third modulation capacitor 33, a second end of the fourth modulation switch 32 is grounded, and a control end of the fourth modulation switch 32 is connected to the control module 22.

The rectifier module 25 is configured to: be externally connected to a resonant circuit 21, generate an induced current, and convert the induced current into a direct current signal for outputting.

The control module 22 is configured to: obtain encoded data, and control turn-on/turn-off of the fourth modulation switch 32 based on the encoded data, so that the resonant circuit 21 can send coding information to a target apparatus based on turn-on/turn-off of the fourth modulation switch 32. The coding information is used to provide the encoded data to the target apparatus.

The encoded data is data that is encoded in one of at least two preset coding modes, and the coding mode represents a coding scheme of encoding the data.

In a possible implementation, the at least two preset coding modes include: a wireless charging coding mode and a radio frequency identification coding mode.

For an operating process of the wireless charging chip in this embodiment of this application, refer to the operating process of the wireless charging chip in the foregoing induction apparatus. Details are not described herein again.

In this way, the control module in the wireless charging chip is configured to: obtain the encoded data, where the encoded data is data that is encoded in one of at least two preset coding modes; and control turn-on/turn-off of the fourth modulation switch based on the encoded data, so that an external resonant circuit can send the coding information to the target apparatus based on turn-on/turn-off of the fourth modulation switch, and the target apparatus obtains, based on the coding information, the encoded data sent by the wireless charging chip. That is, in this application, the wireless charging chip can send, to the target apparatus through the external resonant circuit, the encoded data that is encoded in the at least two coding modes. In this way, the wireless charging chip supports a plurality of coding modes, and reuses a set of a resonant circuit and a modulation capacitor for encoded data, and no additional resonant circuit and modulation capacitor are needed. Therefore, the wireless charging chip can implement a plurality of wireless transmission functions almost without additional costs and layout areas. This enriches functions of the wireless charging chip and improves user experience.

An embodiment of this application provides an electronic device, including the induction apparatus or the wireless charging chip in the foregoing embodiments.

It should be noted that the electronic device includes a wireless device such as a mobile phone (mobile phone), a tablet computer (pad), a computer with a wireless transceiver function, an intelligent wearable product (for example, a smart watch or a smart band), a virtual reality (virtual reality, VR) terminal device, or an augmented reality (augmented reality, AR) terminal device. The electronic device may alternatively be an electronic product such as an electric vehicle capable of wireless charging, a small household appliance (such as a soy milk maker or a robot vacuum cleaner) capable of wireless charging, or an uncrewed aerial vehicle. A specific form of the electronic device is not specifically limited in this embodiment of this application.

A person skilled in the art may clearly understand that, the technologies in embodiments of the present invention may be implemented by software in addition to a necessary general hardware platform. Based on such an understanding, the technical solutions of embodiments of the present invention essentially or the part contributing to the conventional technology may be implemented in a form of a software product. The computer software product may be stored in a storage medium, such as a ROM/RAM, a hard disk, or an optical disc, and includes several instructions for instructing a computer device (which may be a personal computer, a server, or a network device) to perform the methods described in embodiments or some parts of embodiments of the present invention.

Same or similar parts of the embodiments of this specification may be referred to each other. Especially, apparatus and terminal embodiments are basically similar to a method embodiment, and therefore are described briefly. For related parts, refer to partial descriptions in the method embodiment.

## Claims

1. An induction apparatus, comprising a resonant circuit, a first modulation capacitor, a modulation switch module, and a control module, wherein
a first end of the resonant circuit is connected to one end of the first modulation capacitor, the other end of the first modulation capacitor is grounded through the modulation switch module, and a control end of the modulation switch module is connected to the control module;
the control module is configured to: obtain encoded data, and control turn-on/turn-off of the modulation switch module based on the encoded data, wherein the encoded data is data that is encoded in one of at least two preset coding modes, and the coding mode represents a coding scheme of encoding the data; and
the resonant circuit is configured to send coding information to a target apparatus based on turn-on/turn-off of the modulation switch module, wherein the coding information is used to provide the encoded data to the target apparatus.

2. The induction apparatus according to claim 1, further comprising a rectifier module, wherein
the resonant circuit is further configured to generate an induced current;
two input ends of the rectifier module are respectively connected to the first end and a second end of the resonant circuit; and the rectifier module is configured to convert the induced current into a direct current signal for outputting; and
the at least two preset coding modes comprise a wireless charging coding mode.

3. The induction apparatus according to claim 2, wherein the induction apparatus further comprises a charging management circuit; and
the charging management circuit is configured to receive the direct current signal from the rectifier module to charge a battery of the induction apparatus.

4. The induction apparatus according to claim 2 or 3, wherein the at least two preset coding modes further comprise a radio frequency identification coding mode, and the radio frequency identification coding mode is different from the wireless charging coding mode.

5. The induction apparatus according to any one of claims 2 to 4, wherein that the control module is configured to obtain encoded data specifically comprises:
determining a first coding mode;
obtaining to-be-encoded data corresponding to the first coding mode; and
encoding the to-be-encoded data based on the first coding mode, wherein
the first coding mode is one of the at least two preset coding modes of the induction apparatus.

6. The induction apparatus according to claim 5, wherein the control module is further configured to: detect an operating frequency of the resonant circuit or the direct current signal, and determine the first coding mode based on the operating frequency or the direct current signal.

7. The induction apparatus according to any one of claims 3 to 6, wherein the control module, the rectifier module, and the modulation switch module are integrated into a wireless charging chip.

8. The induction apparatus according to claim 7, further comprising a first signal detection circuit, wherein
the first signal detection circuit is connected to an output end of the rectifier module; and
the first signal detection circuit is configured to generate a first signal based on the direct current signal, wherein the first signal indicates the charging management circuit to supply power to the wireless charging chip.

9. The induction apparatus according to claim 8, wherein the first signal detection circuit is further connected to the charging management circuit.

10. The induction apparatus according to claim 8, wherein the induction apparatus comprises a processor, and the first signal detection circuit is connected to the processor; and
the processor is configured to: receive the first signal, and send a second signal to the charging management circuit, wherein the second signal indicates the charging management circuit to supply power to the wireless charging chip.

11. The induction apparatus according to claim 7, wherein the modulation switch module comprises a first modulation switch.

12. The induction apparatus according to claim 11, further comprising a second modulation capacitor and a second modulation switch, wherein
one end of the second modulation capacitor is connected to the second end of the resonant circuit, the other end of the second modulation capacitor is connected to a first end of the second modulation switch, a second end of the second modulation switch is grounded, and a control end of the second modulation switch is connected to the control module;
the control module is further configured to control turn-on/turn-off of the second modulation switch based on the encoded data; and
the resonant circuit is specifically configured to send the coding information to the target apparatus based on turn-on/turn-off of the modulation switch module and the second modulation switch.

13. The induction apparatus according to any one of claims 2 to 4, wherein the control module comprises a first control submodule and a second control submodule, and the modulation switch module comprises a third modulation switch and a fourth modulation switch;
a first end of the third modulation switch and a first end of the fourth modulation switch are both connected to the other end of the first modulation capacitor, a second end of the third modulation switch and a second end of the fourth modulation switch are both grounded, a third end of the third modulation switch is connected to the first control submodule, and a third end of the fourth modulation switch is connected to the second control submodule;
the first control submodule is configured to: obtain first to-be-encoded data in response to a received first trigger signal, encode the first to-be-encoded data based on a preset second coding mode to obtain first encoded data, and control turn-on/turn-off of the third modulation switch based on the first encoded data;
the second control submodule is configured to: obtain second to-be-encoded data in response to a received second trigger signal, encode the second to-be-encoded data based on a preset third coding mode to obtain second encoded data, and control turn-on/turn-off of the fourth modulation switch based on the second encoded data; and
the resonant circuit is specifically configured to: send first coding information to the target apparatus based on turn-on/turn-off of the third modulation switch, wherein the first coding information is used to provide the first encoded data to the target apparatus; or
send second coding information to the target apparatus based on turn-on/turn-off of the fourth modulation switch, wherein the second coding information is used to provide the second encoded data to the target apparatus.

14. The induction apparatus according to claim 13, wherein the first control submodule, the third modulation switch, and the rectifier module are integrated into a wireless charging chip, and the second control submodule comprises a processor.

15. The induction apparatus according to claim 13, further comprising a second signal detection circuit, wherein
the second signal detection circuit is connected to an output end of the rectifier module and the second control submodule; and
the second signal detection circuit is configured to send the second trigger signal to the second control submodule based on the direct current signal.

16. A wireless charging chip, comprising a rectifier module, a fourth modulation switch, and a control module, wherein
a first end of the fourth modulation switch is configured to be externally connected to a third modulation capacitor, a second end of the fourth modulation switch is grounded, and a control end of the fourth modulation switch is connected to the control module;
the rectifier module is configured to: be externally connected to a resonant circuit, generate an induced current, and convert the induced current into a direct current signal for outputting;
the control module is configured to: obtain encoded data, and control turn-on/turn-off of the fourth modulation switch based on the encoded data, to enable the resonant circuit to send coding information to a target apparatus based on turn-on/turn-off of the fourth modulation switch, wherein the coding information is used to provide the encoded data to the target apparatus; and
the encoded data is data that is encoded in one of at least two preset coding modes, and the coding mode represents a coding scheme of encoding the data.

17. The chip according to claim 16, wherein the at least two preset coding modes comprise: a wireless charging coding mode and a radio frequency identification coding mode.

18. An electronic device, comprising the induction apparatus according to any one of claims 1 to 15, or comprising the wireless charging chip according to claim 16 or 17.
